# EUROPÄISCHE PATENTSCHRIFT

(11) **EP 0 477 405 B1**
(45) Veröffentlichungstag und Bekanntmachung des Hinweises auf die Patenterteilung: **27.11.1996**
(21) Anmeldenummer: 90118598.3
(22) Anmeldetag: 27.09.1990
(51) Int. Cl.: G06F 15/16

(54) **Kommunikationssystem zum Übertragen von Nachrichten zwischen jeweils zwei Einheiten**
Communication system for transfering messages between two units
Système de communication permettant de transférer des messages entre deux unités

(43) Veröffentlichungstag der Anmeldung: 01.04.1992
(73) Patentinhaber: Siemens Nixdorf Informationssysteme Aktiengesellschaft, 33102 Paderborn (DE)
(72) Erfinder: Koppe, Gerd, Dipl.-Ing., D-8202 Bad Aibling (DE); Schulte, Franz, Dr. rer.nat., Dipl.-Phys., D-8011 Baldham (DE); Traulsen, Wilfried, Dipl.-Ing., D-8000 München 83 (DE); Yakovleff, André, Dipl.-Ing., North Adelaide SA-5006 (AU)
(74) Vertreter: Fuchs, Franz-Josef, Dr.-Ing.

(56) Entgegenhaltungen:
- EP-A- 0 276 076
- WO-A-88/08652
- Computer network vol. 3, 1979, Seiten 267 - 286; P.Kermani: "Virtual cut- through : a new computer communication switching technique"
- IEEE transactions on computers vol. C-36, no. 5, Mai 1987, Seiten 547 - 553; W.J.Dally: "Deadlock-free message routing in multiprocessor interconnection networks"
- ANGEWANDTE INFORMATIK. APPLIED INFORMATICS. vol. 28, no. 3, März 1986, BRAUNSCHWEIG DE Seiten 118 - 123; R.Buck-Emden: "Zur optimalen packetgrösse in rechnernetzen mit packetvermittlung"
- Proceedings of the 1989 international conference on parallel processing 8 August 1989, Seiten 14 - 18; W.S.Ho: "A novel strategy for controlling hot-spot congestion"

## Beschreibung

Die Erfindung betrifft ein Kommunikationssystem gemäß dem Oberbegriff des Patentanspruches 1.

Derartige Kommunikationssysteme sind bereits bekannt. Sie beruhen im wesentlichen auf dem Prinzip der Nachrichtenvermittlung, d.h. eine zu übertragende Nachricht wird einfach ausgesendet und die Einstellung des benötigten Übertragungsweges erfolgt schrittweise anhand der in der vorangestellten Steuerinformation, dem Nachrichtenkopf, enthaltenen Zielinformation - man siehe Computer Networks, Vol. 3, 1979, Seiten 267 bis 286, insbesondere Abschnitt I "Introduction" und IEEE Transactions on Computers, Vol. C-36, No. 5, May 1987, Seiten 547 bis 553, insbesondere Abschnitt I "Introduction".

Unterschiede ergeben sich dabei durch die Art der Übertragungssteuerung. Kann der Nachrichtenkopf einer Nachricht in einem Verbindungsknoten nicht unmittelbar weitergeleitet werden, weil der benötigte abgehende Kanal auf dem Weg zur Zieleinheit belegt ist, dann wird bei dem einen bekannten Verfahren die zusammenhängend ausgesandte Nachricht am erreichten Verbindungsknoten zwischengespeichert. Das erfordert keine Rückmeldungen, aber in den Verbindungsknoten entsprechend groß bemessene Pufferspeicher in ausreichender Anzahl.

Zur Verringerung der benötigten Speicherkapazitäten in den einzelnen Verbindungsknoten wird daher bei einem anderen bekannten Verfahren die Aussendung gestoppt, und die bereits ausgesandten Teilnachrichten bleiben entlang des bereits hergestellten Übertragungsweges gespeichert, bis der benötigte weiterführende Kanal frei wird und die Aussendung fortgesetzt werden kann. Bei einer Abwandlung dieses Verfahrens wird die Aussendung nicht gestoppt und in Kauf genommen, daß wegen nicht ausreichender Speicherkapazität Nachrichtenteile verloren gehen. Stattdessen wird die Aussendung der gesamten Nachricht mit vorangestelltem Nachrichtenkopf wiederholt, wenn der benötigte Kanal frei wird.

In beiden Fällen sind zur Steuerung des Ubertragungsablaufes Frei- und Besetztzustände der einzelnen Verbindungskanäle zu überwachen und zusätzliche Steuersignale zur sendenden Einheit zu übertragen, z.B. um die Nachrichtenaussendung anzuhalten und wieder fortzusetzen oder aber um eine Wiederholung der gesamten Nachricht anzufordern, ohne daß damit die sendende Einheit auch Gewißheit darüber erlangt, ob die ausgesandte Nachricht am Zielort angekommen ist und daher der Sendespeicher freigegeben werden kann. Dies muß gesondert überwacht und signalisiert werden.

Aus "Proceedings of the 1989 international conference on parallel processing", 8. August 1989, Seiten 14 bis 18 ist weiterhin eine Anordnung bekannt, bei der lediglich das Eintreffen einer Nachricht an einer Zieleinheit von dieser durch ein Rückwärtssignal an die sendende Einheit gemeldet wird und dieses Rückwärtssignal zur Steuerung des Ubertragungsablaufes verwendet wird, indem bei Ausbleiben des Rückwärtssignales bis zu einem vorgegebenen Zeitablauf nach Aussendung einer Nachricht die Aussendung der gesamten Nachricht automatisch wiederholt wird.

Andererseits ergeben sich bei einer von einer Ringleitung zur Verbindung der einzelnen Verbindungsknoten abweichenden Netzstrukturen zusätzliche Probleme bezüglich der Nachrichtenflußsteuerung, da in jedem Verbindungsknoten Anforderungen von mehreren ankommenden Ubertragungskanälen, die eine Durchschaltung zu demselben abgehenden Ubertragungskanal beinhalten, sich zeitlich überlappen können. Dies gilt insbesondere, wenn die jeweils zwischen zwei Einheiten aufzubauenden Übertragungswege über mehrere Verbindungsknoten sich erstrecken. Denn auch in diesem Falle muß sichergestellt sein, daß eine beabsichtigte Nachrichtenübertragung von einer Sendeeinheit zu einer Empfangseinheit innerhalb einer vorgegebenen maximalen Zeitdauer tatsächlich ausgeführt ist, das heißt eine maximale Ausführungszeit garantiert werden kann, damit ein ordnungsgemäßer Betriebsablauf möglich ist.

Aufgabe der Erfindung ist es daher, ein Kommunikationssystem gemäß dem Oberbegriff des Patentanspruches 1 so zu gestalten, daß bei geringstmöglichem Steuerungs- und Speicheraufwand in den einzelnen Verbindungsknoten eine Nachrichtenübertragung innerhalb vorgegebener maximaler Ausführungszeiten garantiert werden kann.

Diese Aufgabe wird durch die kennzeichnenden Merkmale des Patentanspruches 1 gelöst.

Danach erfolgt die Auswahl unter den ankommenden Ubertragungskanälen an einem Verbindungsknoten, die eine Durchschaltung zu einem abgehenden Ubertragungskanal anfordern, nicht anhand einer fest vorgegebenen Prioritätsrangfolge, sondern in an sich bekannter Weise anhand sich ändernder Rangfolgen. Die Umschaltung der Rangfolge wird aber nicht abhängig von der weitergeleiteten Nachricht, sondern abhängig von dem eintreffenden Rückwärtssignal gesteuert. Das hat zur Folge, daß ein ankommender Ubertragungskanal, der die höchste Priorität erreicht hat, diese jeweils behält, bis das Rückwärtssignal eingetroffen ist, auch wenn zwischenzeitlich, das heißt bis zur nächsten Wiederholung einer Nachricht, ein anderer ankommender Kanal aufgrund der bestehenden Prioritätsrangfolge zum abgehenden Kanal durchgeschaltet wird. Da bei n ankommenden Ubertragungskanälen an einem Verbindungsknoten jeder Kanal nach n-1 über den gemeinsamen abgehenden Kanal eintreffenden Rückwärtssignalen die höchste Priorität erreicht, und dies für jeden Verbindungsknoten gilt, wird ein gewünschter übertragungsweg über m Verbindungsknoten VK1 bis VKm spätestens nach (n_{VK1}-1) . (n_{VK2}-1) . ... . (n_{VKm}-1) erfolgreich hergestellten Ubertragungswegen für andere Nachrichten aufgebaut. Abhängig von der jeweiligen Netzstruktur und dem gültigen Wegeschema läßt sich somit eine endliche Ausführungszeit sicherstellen, in der eine gewünschte Nachrichtenübertragung mit Sicherheit ausgeführt wird. Dabei ist der Aufwand für einen derartigen Übertragungsablauf mit nur einem einzigen Rückwärtssignal in Verbindung mit der sehr geringen Pufferspeicherkapazität in den einzelnen Verbindungsknoten äußerst gering.

Schaltet man außerdem die Prioritätsrangfolge für den Fall, daß der ankommende Ubertragungskanal ein Verbindungskanal von einem anderen Verbindungsknoten ist, gemäß Patentanspruch 2 erst weiter, wenn eine der Anzahl der über diesen Verbindungskanal möglicherweise Anforderungen auslösenden Einheiten entsprechende Anzahl von Rückwärtssignalen über den belegten abgehenden Ubertragungskanal eingetroffen ist, dann kann die Wartezeit dieser Einheiten bis zur erfolgreichen Ausführung der gewünschten Nachrichtenübertragung verkürzt und der einer vorgegebenen Netzlast entsprechenden mittleren Wartezeit angepaßt werden.

Bei dem neuen Kommunikationssystem gemäß der Erfindung können die physikalischen Ubertragungskanäle ohne weiteres auch als virtuelle Übertragungskanäle betrieben werden, was den Anwendungsbereich und den Freiheitsgrad bei der Netzgestaltung für die Verbindungsknoten erweitert. Bei gleichrangigen virtuellen Ubertragungskanälen vervielfacht sich gemäß Patentanspruch 3 lediglich die Anzahl der eine Anforderung stellenden Kanäle entsprechend der Anzahl der zu berücksichtigenden virtuellen Übertragungskanäle, die bei der Priorisierung einer Anforderung zu berücksichtigen sind, wobei die Rangfolgenänderung durch das Rückwärtssignal beibehalten werden kann.

Bei Berücksichtigung vorgegebener Prioritätsränge für die virtuellen Kanäle in Folge von zu berücksichtigenden Annahmesperren einiger Zieleinheiten im System ist es dagegen gemäß Patentanspruch 4 zweckmäßig, die Rangfolge der Prioritätsränge durch ein von der Weiterleitung der Nachricht über einen abgehenden Übertragungskanal abgeleitetes Steuersignal zu steuern, damit eine Nachricht auf einem virtuellen Kanal mit höherem Prioritätsrang schneller berücksichtigt wird und nicht gesperrt werden kann, wenn die Nachricht auf einem virtuellen Kanal mit niedrigerem Prioritätsrang auf eine Annahmesperre läuft und dann das Rückwärtssignal ausbleibt.

Zusätzliche Maßnahmen bezüglich der Änderung der virtuellen Prioritätsrangfolgen ergeben sich schließlich aus Patentanspruch 5 bei der Anwendung des Kommunikationssystems in Multiprozessorsystemen mit gemeinsamen Speicher, um betriebsbedingte Verklemmungen zu vermeiden.

In allen Anwendungsfällen mit virtuellen Übertragungskanälen bleiben gemäß Patentanspruch 6 die einmal belegten virtuellen Übertragungskanäle eines gewünschten Übertragungsweges belegt, bis das Rückwärtssignal eintrifft, während die benutzten physikalischen Übertragungskanäle bereits mit der Weiterleitung einer Nachricht über den jeweils belegten abgehenden Übertragungskanal wieder freigegeben werden. Auf diese Weise können gegebenenfalls auch über andere ankommende physikalische Übertragungskanäle eintreffende Nachrichten eines anderen virtuellen Prioritätsranges zwischenzeitlich über denselben abgehenden physikalischen Kanal weitergeleitet werden.

Weiterbildungen der Erfindung ergeben sich im übrigen aus den Patentansprüchen 7 bis 14, die sich auf die Ausbildung der Verbindungsknoten und der in jedem Verbindungsknoten benötigten Prioritätssteuerung beziehen.

Einzelheiten der Erfindung seien nachfolgend anhand eines in der Zeichnung dargestellten Ausführungsbeispieles näher erläutert. Im einzelnen zeigen
- FIG 1: ein Strukturbild eines Multiprozessorsystems mit einem Kommunikationssystem gemäß der Erfindung,
- FIG 2: ein Ablaufdiagramm für die Nachrichtenübertragung gemäß der Erfindung,
- FIG 3: einen Verbindungsknoten des Kommunikationssystems gemäß FIG 1 mit den benötigten virtuellen Kanälen für die einzelnen Einheiten und Verbindungskanäle zur Sicherung eins verklemmungsfreien Betriebs des Multiprozessorsystems,
- FIG 4: eine Übersichtstabelle der zwischen den einzelnen Einheiten als Quellen und Senken des Verbindungsnetzwerkes benötigten virtuellen Kanäle mit ihrem Prioritätsrang in Anlehnung an FIG 3,
- FIG 5: ein Blockschaltbild eines Verbindungsknotens,
- FIG 6: ein Blockschaltbild einer Auswahleinrichtung für die ankommenden virtuellen Kanäle eines physikalischen Kanals gemäß FIG 5,
- FIG 7: ein Ablaufdiagramm für die Wegedurchschaltung in einem Verbindungsknoten gemäß FIG 5,
- FIG 8 bis FIG 10: Beispiele einer möglichen gegenseitigen Blockade der Nachrichtenübertragung über virtuelle Übertragungskanäle unterschiedlichen Prioritätsranges abhängig von der Änderung der jeweiligen virtuellen Prioritätsrangfolgen durch das Rückwärtssignal oder bei Weiterleitung einer Nachricht,
- FIG 11: eine die Auswahleinrichtungen von FIG 6 ergänzende Überwachungsschaltung zur Feststellung von anstehenden Anforderungen unabhängig vom Prioritätsrang der benutzten virtuellen Übertragungskanäle zur Beeinflussung der Prioritätssteuerung von FIG 5,
- FIG 12: ein Blockschaltbild der Prioritätssteuerung von FIG 5,
- FIG 13 und FIG 14: Beispiele für verschiedene Prioritätsrangfolgen mit Bezug auf die an einem Verbindungsknoten ankommenden Kanäle für die Auswahlsteuerung in der Prioritätssteuerung gemäß FIG 9,
- FIG 15: eine zugehörige Wahrheitstabelle zur Ermittlung der Anforderung mit der jeweils höchsten Priorität,
- FIG 16 und FIG 17: Schaltungsbeispiele zur Realisierung der Wahrheitstabelle von FIG 12,
- FIG 18: eine Steuerschaltung zur Änderung der virtuellen Prioritäten in der Prioritätssteuerung von FIG 9,
- FIG 19: eine Netzwerkkonfiguration für acht Verbindungsknoten in einem 3-dimensionalen binären System und
- FIG 20: ein Blockschaltbild zur Berücksichtigung mehrerer über einen ankommenden Kanal eintreffender Nachrichten.

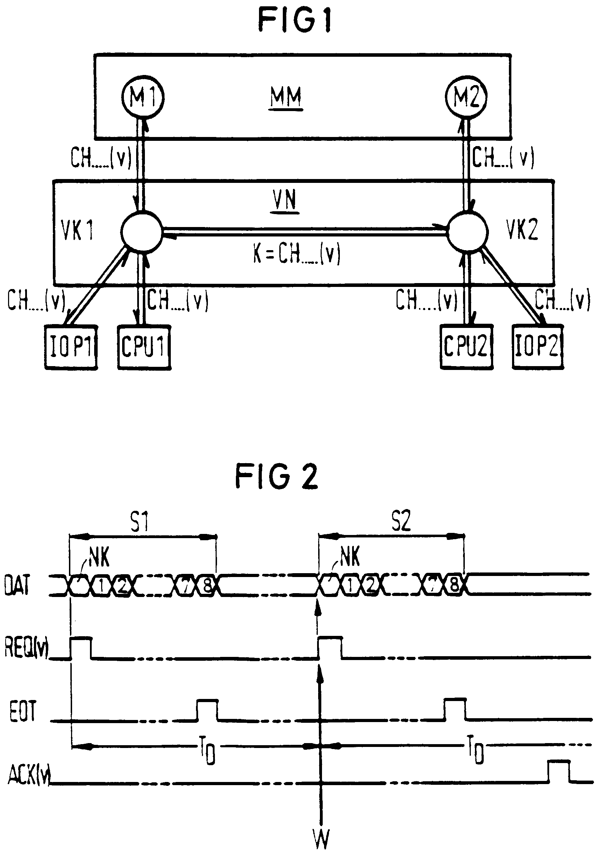

FIG 1 zeigt das Strukturbild eines Multiprozessorsystems, bei dem das Kommunikationssystem gemäß der Erfindung eingesetzt ist. Das Vermittlungsnetzwerk VN besteht z.B. aus zwei Verbindungsknoten VK1 und VK2, die durch bidirektionale Verbindungskanäle K als bidirektionale Übertragungskanäle CH...(v) miteinander verbunden sind und an die alle Einheiten M..., CPU..., IOP... in gleicher Weise über bidirektionale Übertragungskanäle CH...(v) angeschlossen sind, wobei alle Übertragungskanäle als virtuelle Kanäle betrieben werden. Die Anzahl der VerbindungsVK... im Vermittlungsnetzwerk VN kann beliebig groß und die Beschaltung der einzelnen Verbindungsknoten VK... mit Speichereinheiten M und operativen Einheiten in Form von Prozessoren CPU... und Ein-/Ausgabesystemen IOP... wahlweise unterschiedlich sein.

Ausgehend von einem Verbindungsknoten VK.. mit einer oder zwei Speichereinheiten M..., einem Prozessor CPU... und einem Ein-/Ausgabesystem IOP... als Monoprozessor kann in Verbindung mit einem gleichartig beschaltetem Verbindungsknoten auf ein Biprozessorsystem als kleinstes Multiprozessorsystem erweitert werden, das durch hinzufügen weiterer Verbindungsknoten VK... zu einem Multiprozessorsystem der gewünschten Größe ausgebaut werden kann. Als Vorleistung für einen konzipierten Maximalausbau mit n Verbindungsknoten VK... ist lediglich eine ausreichende Anzahl von Verbindungskanälen K... an jedem Verbindungsknoten VK... und eine entsprechend ausgelegte Durchschaltesteuerung zu erbringen. So lassen sich z.B. bei drei an einem Verbindungsknoten VK... angeschlossenen Verbindungskanälen K... Multiprozessorsysteme mit bis zu 8 Verbindungsknoten und entsprechend vielen Prozessoren CPU realisieren, wobei an jedem Verbindungsknoten VK... gleichzeitig mehrere Übertragungswege durchgeschaltet werden können.

Das dem Kommunikationssystem gemäß der Erfindung zugrundeliegende Übertragungsverfahren arbeitet mit Unterteilung einer Nachricht in gleichlange Teile mit gemeinsamem Nachrichtenkopf, wobei der Nachrichtenkopf zur Steuerung der Wegedurchschaltung und die zugehörigen Nachrichtenteile jeweils nacheinander vollständig ausgesendet werden, und das Erreichen des Endpunktes eines Übertragungsweges dem jeweiligen Ausgangspunkt durch eine Rückmeldung bestätigt wird. Trifft diese Rückmeldung nicht bis zu einem vorgegebenen Zeitpunkt nach Beginn der Nachrichtenaussendung ein, dann wird die gesamte Nachricht automatisch wiederholt. Die vorgegebene Wartezeit läßt sich dabei sehr einfach von der Laufzeit einer Nachricht zum vorgegebenen Zielpunkt ableiten. Ist die Nachricht ausreichend lang und der Übertragungsweg kurz, kann das Rückwärtssignal ohne weiteres bereits eintreffen, bevor das Endesignal gesendet worden ist. Außerdem wird insgesamt nur ein Rückwärtssignal benötigt, und es sind in den Verbindungsknoten keine Speicher für eine länger andauernde Zwischenspeicherung erforderlich.

FIG 2 zeigt einen entsprechenden Übertragungsablauf. Die mit DAT bezeichnete Zeile gibt die zu übertragende Nachricht wieder, die aus einem Nachrichtenkopf NK und beispielsweise den Nachrichtenteilen 1 bis 8 besteht. Der Nachrichtenkopf NK wird jeweils von einem gesonderten Anforderungssignal REQ(v) und der jeweils letzte Nachrichtenteil von einem Endesignal EOT begleitet. Mit der ersten Aussendung S1 der Nachricht beginnt die Überwachungszeit T_{D}. Trifft die Rückmeldung ACK(v) nicht rechtzeitig ein, erfolgt automatisch eine Wiederholung S2 der gesamten Nachricht. Es kann dabei mehrere solcher Wiederholungen geben, bis die Rückmeldung ACK(v) eintrifft.

Damit eine Nachricht nicht zu oft wiederholt werden muß, bis sie ihr Ziel erreicht, werden alle im Rahmen eines herzustellenden Übertragungsweges bereits belegten Übertragungskanäle jeweils solange belegt gehalten, bis die Rückmeldung auf dem Wege zur sendenden Einheit eingetroffen ist. Der Übertragungsweg braucht also bei jeder Nachrichtenwiederholung nicht jeweils vom Anfangspunkt aus neu hergestellt zu werden.

Dies wird dadurch bewirkt, daß die Prioritätsrangfolge der ankommenden Übertragungskanäle bezogen auf einen abgehenden Übertragungskanal erst durch das Rückwärtssignal ACK... geändert wird, also wenn eine Nachricht die Zieleinheit erreicht hat. Solange dies nicht der Fall ist, bleibt ein höchstpriorisierter ankommender Kanal auch der höchstpriorisierte, so daß über diesen Kanal wiederholt eintreffende Nachrichten jedesmal unmittelbar weitergeleitet werden können. Da sich dieses Spiel in jedem nachfolgenden Verbindungsknoten VK... fortsetzt, wird nach endlicher Zeit der gewünschte Übertragungsweg mit Sicherheit hergestellt, und die mit dem Rückwärtssignal ACK... wieder freigegebenen Übertragungskanäle können für die Herstellung anderer Übertragungswege verwendet werden.

Das gilt ebenso für den Fall, daß die physikalischen als virtuelle Übertragungskanäle betrieben werden. Es vervielfacht sich bei gleichrangigen virtuellen Kanälen lediglich die Anzahl der Anforderungen stellenden und daher von der Prioritätssteuerung zur berücksichtigenden Übertragungskanäle, indem entsprechend der Ordnungszahl der virtuellen Kanäle die physikalischen Kanäle Gruppen bilden und innerhalb jeder Gruppe der jeweils höchstpriorisierte physikalische Kanal ermittelt wird. Von diesen wird dann derjenige der jeweils höchstpriorisierten virtuellen Gruppe berücksichtigt.

Etwas komplexer gestalten sich die Verhältnisse, wenn gemäß FIG 1 das Kommunikationssystem für ein Multiprozessorsystem mit gemeinsamem Speicher verwendet wird und virtuelle Übertragungskanäle unterschiedlichen Prioritätsranges erforderlich werden, um einen geordneten Betrieb verhindernde Systemverklemmungen zu vermeiden.

Wie bereits in der parallelen europäischen Patentanmeldung ......................... (GR 90 P 1680 E) ausführlich dargelegt worden ist, erfordert die Abwicklung eines Auftrages, z.B. das Lesen von Daten aus einer der Speichereinheiten M..., die aufeinanderfolgende Herstellung mehrerer verschiedener Übertragungswege.

Anforderungen zur Abwicklung eines Auftrages gehen dabei immer von einer der operativen Einheiten CPU... oder IOP... als Quellpunkt aus und werden in der virtuellen Ebene v2 mit der niedrigsten Priorität v=2 entweder direkt oder über zwischengeschaltete Verbindungskanäle K..., deren Anzahl im Prinzip keine Rolle spielt, zu einer Speichereinheit M... als Endpunkt dieses ersten Übertragungsweges geleitet. Die Speichereinheit ist dann Quellpunkt für einen weiteren Übertragungsweg in einer höheren virtuellen Ebene, und zwar in der höchsten virtuellen Ebene v0, wenn die Daten in der Speichereinheit greifbar sind und unmittelbar an die anfordernde Einheit D als Endpunkt übertragen werden können, oder in einer virtuellen Zwischenebene v1, wenn zunächst der Übertragungsweg zu einem Cachespeicher CA... als Endpunkt - gegebenenfalls wieder direkt oder über zwischengeschaltete Verbindungskanäle K - aufgebaut werden muß. Als Quellpunkt leitet der angesteuerte Cachespeicher CA... dann in einen weiteren Übertragungsweg über, wobei Endpunkt im einen Falle unmittelbar die anfordernde Einheit oder zunächst die anfordernde Speichereinheit M... ist, von der dann ein weiterer Übertragungsweg zur anfordernden Einheit führt. Für den gesamten Übertragungsweg vom Cachespeicher CA... über die Speichereinheit M... zur anfordernden Einheit können dann einheitlich virtuelle Übertragungskanäle desselben Prioritätsranges, nämlich der höchsten Prioritätsebene v0, verwendet werden.

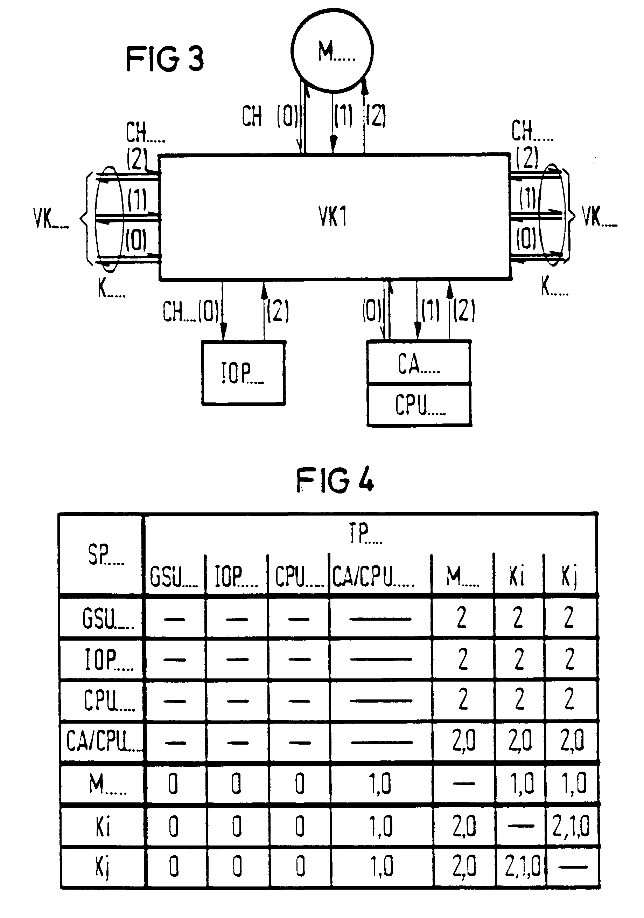

Daraus resultiert, daß nicht alle physikalischen Übertragungskanäle an einem Verbindungsknoten VK in gleichem Umfange als virtuelle Übertragungskanäle CH...(v) betrieben werden müssen. Alle operativen Einheiten ohne private Cachespeicher CA... benötigen abgehend und ankommend je nur einen virtuellen Kanal in der Ebene v2 bzw. v0. Alle operativen Einheiten mit Cachespeicher CA... benötigen zusätzlich einen ankommenden Kanal in der Ebene v1 und einen abgehenden Kanal in der Ebene v0, während für jede Speichereinheit M... je ein ankommender virtueller Kanal in der Ebene v2 und v0 sowie je ein abgehender Kanal in der Ebene v1 und v0 erforderlich ist. Lediglich die Verbindungskanäle K... zwischen den Verbindungsknoten VK... erfordern in jeder Übertragungsrichtung je einen Kanal in jeder der virtuellen Ebenen v2, v1 und v0. FIG 3 zeigt die entsprechende Verteilung der beim Anschluß der einzelnen Einheiten und Verbindungskanäle an einen Verbindungsknoten benötigten virtuellen Kanäle CH...(0) bis CH...(2).

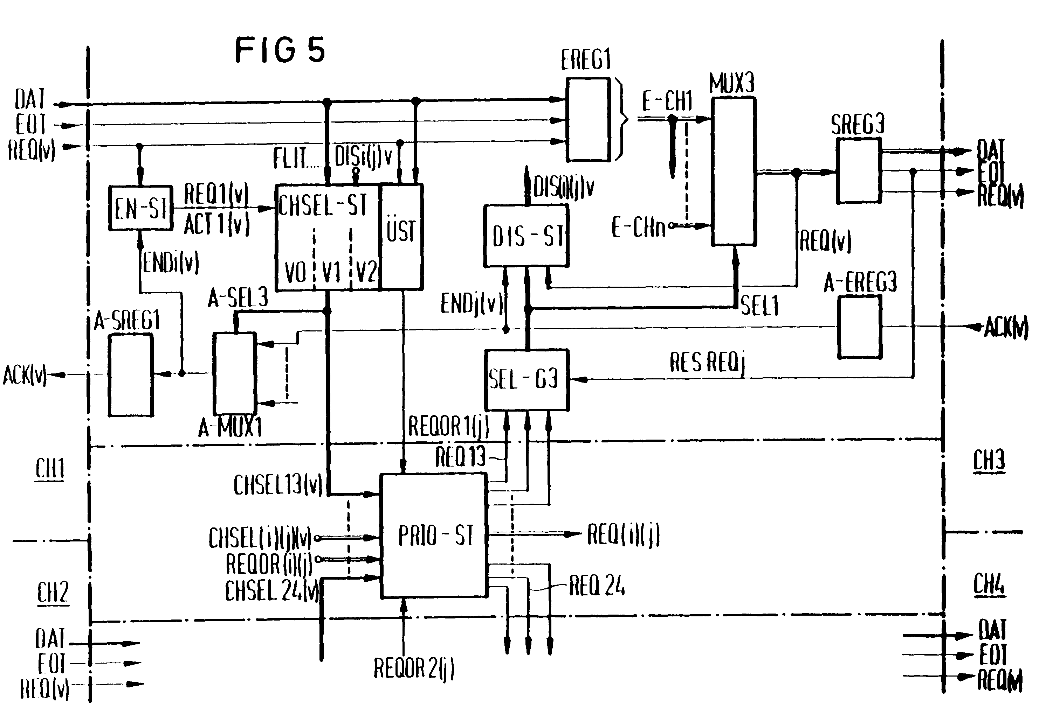

Eine entsprechende Übersichtstabelle mit den gemäß der vertikalen Auflistung als Quellpunkte SP... und gemäß der horizontalen Auflistung als Endpunkte TP... an einen Verbindungsknoten ten angeschlossenen Einheiten und Verbindungskanäle ist in FIG 4 wiedergegeben. Als Einheiten können in Frage kommen globale Speichereinheiten GSU..., Ein-/Ausgabesysteme IOP..., Prozessoren CPU ohne Cachespeicher, Prozessoren mit Cachespeicher CA/CPU... sowie Speichereinheiten M.... Dabei sind direkte Verbindungen zwischen ankommenden und abgehenden Übertragungskanälen derselben Einheit oder desselben Verbindungskanales sowie zwischen den Speichereinheiten M... ausgeschlossen, wie die waagerechten Striche in den einzelnen Feldern andeuten, während die Ziffern in den übrigen Feldern die einzelnen Prioritätsränge v=0, 1 oder 2 entsprechend den virtuellen Ebenen v0, v1 und v2 der virtuellen Übertragungskanäle CH...(v) angeben und zwar zeilenweise ankommend und spaltenweise abgehend mit Bezug auf die jeweilige Einheit oder den jeweiligen Verbindungskanal K....

FIG 5 zeigt das Blockschaltbild eines Verbindungsknotens. Gezeigt sind im linken Teil zwei ankommende physikalische Übertragungskanäle CH1 und CH2 sowie zwei abgehende physikalische Übertragungskanäle CH3 und CH4 im rechten Teil, wobei lediglich die physikalische Verbindung zwischen den Übertragungskanälen CH1 und CH3 mit den zugehörigen Übertragungsleitungen gemäß FIG 2 ausführlicher dargestellt ist.

Alle ankommenden Übertragungskanäle CH... werden mit ihren Übertragungsleitungen auf ein Empfangsregister EREG1 geführt, und von jedem Empfangsregister führt ein Verbindungsweg zu jedem abgehenden möglichen Übertragungskanal, genauer gesagt zu einem Eingang E-CH... eines Auswahlschalters, z.B. MUX3, der jedem abgehenden Kanal, z.B. CH3, individuell zugeordnet ist und an dessen Ausgang jeweils ein Senderegister, z.B. SREG3, angeschaltet ist. Beide Register werden periodisch wiederholt im Abstand voneinander getaktet, so daß jede über einen ankommenden Übertragungskanal ankommende Teilnachricht, Nachrichtenkopf oder Nachrichtenteil, daher nur kurzzeitig in den Registern EREG1 und SREG3 nacheinander gespeichert wird, um bei einem Nachrichtenkopf NK zwischenzeitlich die Einstellung des Auswahlschalters, z.B. MUX3, zu ermöglichen, wenn der gewünschte abgehende Kanal, z.B. CH3, frei ist.

Ist die Sendedauer für die einzelnen Teilnachrichten kleiner als die Zeit bis zur Einstellung des Auswahlschalters MUX... und damit bis zur Durchschaltung des Verbindungsweges zum Senderegister SREG..., dann kann durch dem Empfangsregister EREG... nachgeschaltete und im gleichen Rhythmus getaktete, nicht gezeigte Zwischenregister eine entsprechende Verzögerung in der Weiterleitung der Nachrichten erreicht werden.

In entgegengesetzter Richtung besteht ein gleichartiger aufgebauter Verbindungsweg für die Rückmeldung ACK(v) mit einem Empfangsregister, z.B. A-EREG3, einem Auswahlschalter, z.B. A-MUX1, und einem Senderegister, z.B. A-SREG1, so daß eine über einen abgehenden Kanal, z.B. CH3, ankommende Rückmeldung ACK(v) jedem ankommenden Kanal, z.B. CH1, zugeleitet werden kann.

Die Ermittlung des jeweils durchzuschaltenden Verbindungsweges erfolgt durch eine jedem ankommenden virtuellen Kanal CH...(v) zugeordnete Auswahleinrichtung CHSEL-ST(v...) zur Ermittlung des den jeweils zu belegenden abgehenden virtuellen Kanal einschließenden Wegesignales CHSELij(v) in Verbindung mit einer alle diese Wegesignale CH(i)(j)(v) auswertenden Prioritätssteuerung PRIO-ST.

Diese Auswahleinrichtungen CHSEL-ST... werden jeweils durch eine das Eintreffen einer Anforderung REQ(v) überwachenden Freigabeeinrichtung EN-ST, z.B. eine bistabile Kippstufe je Prioritätsrang v, zur Auswertung des zugehörigen Nachrichtenkopfes NK freigegeben.

Bei j abgehend belegbaren Übertragungskanälen können von jedem ankommenden Übertragungskanal ausgehend maximal j verschiedene Wegesignale für jede virtuelle Ebene, z.B. v0 bis v2, erzeugt werden. Jedem dieser Wegesignale entspricht ein Einstellsignal REQ(i)(j) von denen bei jeweils i zu einem Ausgangskanal durchschaltbaren ankommenden Kanälen sich jeweils i Einstellsignale auf denselben Ausgangskanal und damit denselben Auswahlschalter, z.B. MUX3, beziehen. Diese Gruppen von jeweils auf denselben abgehenden Kanal CHj bezogenen Einstellsignalen REQ(i)j werden jeweils einem, dem zugehörigen Auswahlschalter, z.B. MUX3, zugeordneten Einstellgenerator, z.B. SEL-G3, zugeführt, der daraus die Einstellinformation, z.B. SEL1, für den Auswahlschalter ableitet und speichert, bis das Endesignal EOT der Nachricht am Ausgang des zugehörigen Senderegisters, z.B. SREG3, erscheint.

Die physikalische Durchschaltung wird damit wieder freigegeben, nicht jedoch die Belegung des abgehenden virtuellen Kanals CH...(v). Die Aufrechterhaltung dieser Belegung wird durch die Einrichtung DIS-ST gesteuert, die alle von den übrigen ankommenden virtuellen Kanälen ausgehenden und denselben virtuellen abgehenden Kanal CH...j(v) betreffenden Wegesignale durch entsprechende Sperrsignale DIS(i)j(v) sperrt, wobei die jeweils auf einen ankommenden Kanal CHi bezogenen Sperrsignale DISi(j)(v) der jeweils zugehörigen Auswahleinrichtung CHSEL-STv... zugeleitet werden. Diese Sperrsignale werden in einfacher Weise aus der vom Einstellgenerator SEL-G... gelieferten Einstellinformationen SEL... in Verbindung mit dem vom weitergeleiteten Anforderungssignal REQ(v) angezeigten Prioritätsrang v abgeleitet und bleiben dann wirksam, bis ein von der ankommenden Rückmeldung ACK(v) abgeleitetes Endesignal ENDj(v) eintrifft. Bei der Weiterleitung der Rückmeldung an den jeweils ankommenden Übertragungskanal wird außerdem die Freigabeeinrichtung EN-ST wieder zurückgestellt, so daß das bisher gültige Wegesignal CHSELij(v) entfällt und damit auch der ankommende Kanal wieder freigegeben wird.

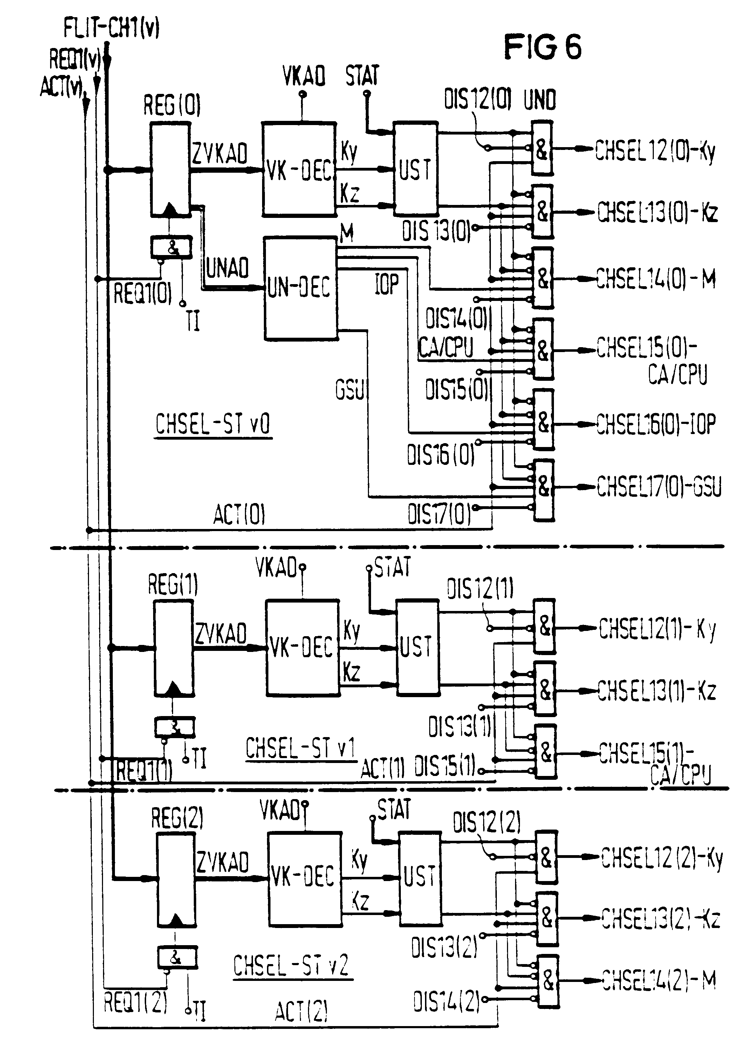

FIG 6 zeigt die für einen ankommenden Verbindungskanal (z.B. CH1 = Kx) benötigten Auswahleinrichtungen CHSEL-STv... für die drei möglichen virtuellen Kanäle des Prioritätsranges v = 0, 1 und 2. Alle drei Auswahleinrichtungen bestehen aus einem Eingangsregister REG(v) von denen eines bei Eintreffen eines Nachrichtenkopfes NK in Folge des gleichzeitigen Anforderungssignales, z.B. REQ1(v), die Ansteuerinformation FLIT... übernimmt, die die Adresse ZVKAD des Zielverbindungsknotens und die Adresse UNAD der Zieleinheit enthält. Mit der Einrichtung VK-DEC wird anhand der Adresse VKAD des erreichten Verbindungsknotens jeweils überprüft, ob ein anderer Verbindungsknoten anzusteuern und welcher abgehende Verbindungskanal, z.B. Ky oder Kz, zu belegen ist, oder ob eine der Einheiten am eigenen Verbindungsknoten anzusteuern ist. Im letzteren Fall ist wegen der entsprechend der Tabelle von FIG 4 gegebenen Verkehrsmöglichkeiten ein zusätzlicher Adressendecoder UN-DEC nur für den Prioritätsrang v = 0 erforderlich, da in den anderen Fällen nur ein Cachespeicher CA/CPU... oder eine Speichereinheit M... am eigenen Verbindungsknoten betroffen sein kann.

Für alle möglichen Ausgänge der Einrichtungen VK-DEC und UN-DEC ist weiterhin ein nachgeschaltetes UND-Glied UND vorgesehen, daß das jeweilige Wegesignal CHSEL... liefert, wenn nicht die Erzeugung durch ein entsprechendes Sperrsignal DIS... verhindert wird. Außerdem werden die Wegesignale CHSEL für Einheiten M..., CA/CPU..., IOP... oder GSU... am erreichten Verbindungsknoten unterdrückt, wenn einer der abgehenden Verbindungskanäle, z.B. Ky oder Kz, zu belegen ist. Dadurch wird verhindert, daß die Adresse UNAD irrtümlich ausgewertet wird, bevor der Zielverbindungsknoten erreicht worden ist. Weiterhin kann zwischen den Ausgängen der Einrichtung VK-DEC und den zugehörigen UND-Gliedern UND jeweils eine Umsteuereinrichtung UST vorgesehen sein, die bei Störung oder Nichtvorhandensein eines ausgewählten Verbindungskanales, z.B. Ky, anhand der zusätzlichen Informationen STAT eine Umsteuerung auf einen anderen Kanal, z.B. Kz, ermöglicht. Freigegeben werden die so ermittelten Wegesignale CHSEL... schließlich durch ein vom Eingangssignal, z.B. REQ1(v) verzögert abgeleitetes Signal ACT(v).

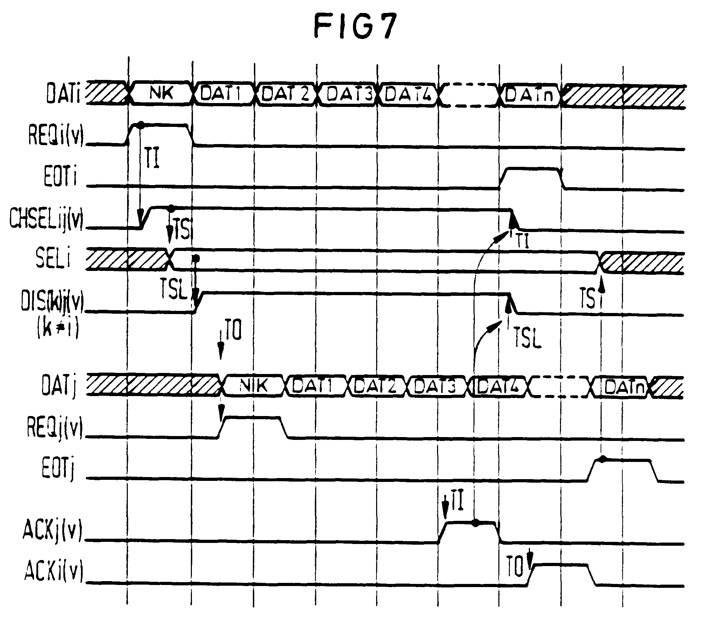

Damit ergibt sich der in FIG 7 dargestellte Steuerungablauf: Das parallel zu einem Nachrichtenkopf NK über einen Ubertragungskanal CHi eintreffende Anforderungssignal REQi(v) führt, wenn kein Sperrsignal DIS... dies verhindert, mit einem Übernahmetakt TI zum Wegesignal CHSELij(v) für die Durchschaltung zum abgehenden Kanal CHj. Läßt die Prioritätssteuerung PRIO-ST die Durchschaltung zu, wird mit einem Steuertakt TS das Einstellsignal REQij und davon abhängig die Einstellinformation SELi erzeugt und gespeichert. Aufgrund des am Ausgang des zugehörigen Auswahlschalters MUXj wirksam werdenden weitergeleiteten Anforderungssignales REQj(v) werden dann mit einem Folgetakt TSL des Taktes TS die Sperrsignale DIS(k)j(v) für alle übrigen ankommenden Übertragungskanäle CH(k) außer für k = i erzeugt und gespeichert, so daß von diesen keine Wegesignale CHSEL(k)j(v) für den belegten abgehenden virtuellen Kanal CHj(v) erzeugt werden können. Nach Durchschaltung des Verbindungsweges zum abgehenden Kanal CHj erfolgt mit einem Ausgabetakt TO die Übernahme der über ein Zwischenregister weitergeleiteten Teilnachrichten, die dann aufeinanderfolgend nach Eintreffen über die ankommenden Datenleitungen DATi über die abgehenden Datenleitungen DATj weitergeleitet werden. Analoges gilt für die Begleitzeichen REQi(v) → REQj(v) und EOTi → EOTj. Mit der Weiterleitung des Endesignales EOTj wird das Einstellsignal SELi wieder unwirksam und die physikalische Verbindungsdurchschaltung durch RESREQj wieder aufgehoben. Dagegen wird die Belegung des virtuellen Kanales mit Eintreffen der Rückmeldung ACKj(v) in rückwärtiger Richtung, das als ACKi(v) weitergeleitet wird, aufgehoben, indem zunächst mit ENDj(v) die Sperrsignale DIS(k)j(v) und anschließend das Wegesignal CHSELij(v) über die Freigabesteuerung EN-ST mit dem Signal ENDi(v) durch Beendigung des Signales ACT...(v) unwirksam geschaltet werden (FIG 5).

Welche von mehreren gleichzeitig bestehenden Übertragungsanforderungen der virtuellen Übertragungskanäle CH(i)(j)(v) an einem Verbindungsknoten jeweils als erste berücksichtigt wird, entscheidet die Prioritätssteuerung PRIO-ST.

Allgemein wäre es ausreichend, alle möglichen ankommenden virtuellen Übertragungskanäle in eine feste Prioritätsrangfolge einzugliedern und diese Rangfolge mit jedem Rückwärtssignal ACK... durch zyklische Verschiebung der jeweils höchsten Priorität zu ändern, so daß in jeder Rangfolge ein anderer der ankommenden Übertragungskanäle die höchste Priorität erhält.

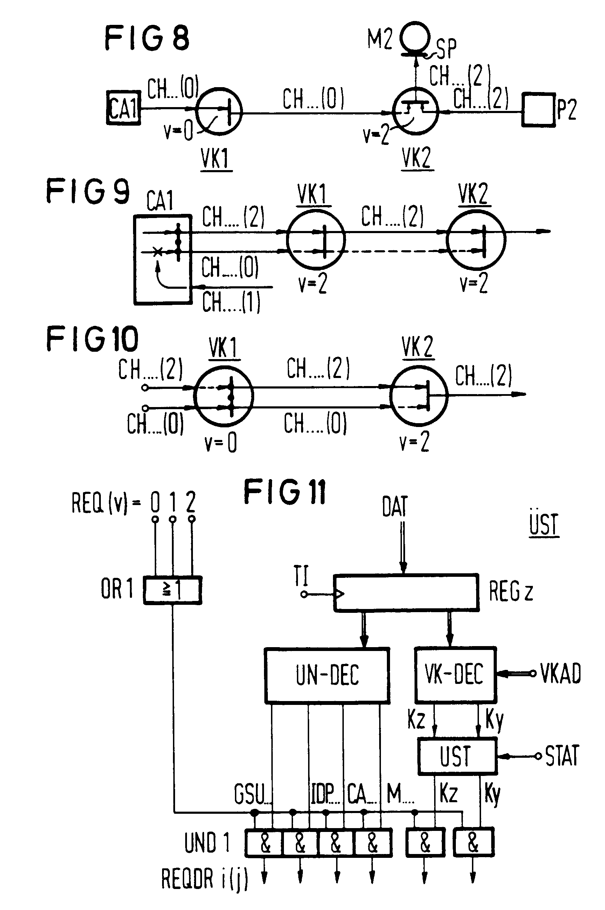

Dieses allgemeine Prinzip bereitet aber Schwierigkeiten, wenn in Systemen mit möglichen Annahmesperren für eine übertragene Nachricht an einzelnen Empfangseinheiten zu rechnen ist, da dann das Rückwärtssignal für die Prioritätsfortschaltung ausbleiben kann. Figur 8 veranschaulicht einen derartigen Fall in Bezug auf das zugrundegelegte Multiprozessorsystem. Die Speichereinheit M2 am Verbindungsknoten VK2 wartet beispielsweise auf Speicherdaten aus dem Cachespeicher CA1 am Verbindungsknoten VK1 und ist daher für weitere Anforderungen gesperrt. Zwischenzeitlich wird am Verbindungsknoten VK2 der virtuelle Prioritätsrang v = 2 eingestellt, so daß die Anforderungen vom Prozessor P2 an die Speichereinheit M2 durchgeschaltet ist. Da diese Anforderung von der Speichereinheit M2 nicht angenommen werden kann, bleibt das Rückwärtssignal ACK... aus. Folglich wird auch die gültige Prioritätsrangfolge nicht verändert, so daß die über den höher priorisierten virtuellen Übertragungskanal CH...(0) eintreffenden Daten vom Cachespeicher CA1 zur Speichereinheit M2 am Verbindungsknoten VK2 blockiert werden. Es kommt daher zu einer Systemverklemmung, die in einfacher Weise behoben werden kann, wenn die Prioritätsrangfolgen statt mit dem Rückwärtssignal ACK... durch ein von der Weiterleitung einer Nachricht abhängiges Signal, z.B. dem weitergeleiteten Endesignal EOT, geändert wird.

Mögliche Annahmesperren können also andere virtuelle Kanäle desselben physikalischen Übertragungskanals unter Umständen blockieren, so daß es notwendig ist, in diesem Falle die virtuellen Prioritätsrangfolgen abhängig von der Weiterleitung einer Nachricht über einen abgehend belegten Kanal zu ändern, während die physikalischen Prioritätsrangfolgen innerhalb eines jeden virtuellen Prioritätsranges weiterhin abhängig vom Rückwärtssignal geändert werden. Die garantierbare Ausführungszeit für die Übertragung einer Nachricht verlängert sich zwar dadurch, aber sie bleibt garantierbar, denn ein einmal eingestellter physikalischer Übertragungsweg behält die höchste Priorität bis zum Eintreffen des Rückwärtssignales, auch wenn die Prioritätsrangfolge der virtuellen Übertragungskanäle für diesen Übertragungsweg sich ändert.

Wenn zusätzlich, wie bei dem zugrundegelegten Multiprozessorsystem, die Aufhebung einer Sperre von der Bevorzugung eines virtuellen Übertragungsweges abhängig ist, nämlich der Datentransfer vom Cachespeicher CA... zu einer Speichereinheit M... und anschließend zur anfordernden operativen Einheit, dann ist es weiterhin notwendig, im Falle der Bevorrechtigung der Übertragungskanäle des zugehörigen höchsten virtuellen Prioritätsranges v = 0 diesen solange beizubehalten, bis das Rückwärtssignal ACK... vorliegt, da dieses gleichbedeutend mit der Aufhebung einer Sperre ist.

Beide Steuerungsarten erfordern eine Zusatzmaßnahme, wie anhand von FIG 9 und FIG 10 gezeigt werden soll: FIG 9 liegt dabei die Annahme zugrunde, daß ein Cachespeicher CA1 auf dem virtuellen Kanal CH...(2) über den Verbindungsknoten VK1 und den Verbindungsknoten VK2 eine Anforderung abgesetzt hat, die aber noch nicht am Ziel angekommen ist, und am Verbindungsknoten VK1 ist augenblicklich der virtuelle Prioritätsrang v = 2 bevorrechtigt. Richtet in diesem Übertragungszustand eine der Speichereinheiten M... auf dem virtuellen Kanal CH...(1) eine Anforderung an den Cachespeicher CA1, die dieser sofort annimmt, dann unterbleibt in Folge dieser Unterbrechung die Nachrichtenwiederholung auf dem virtuellen Kanal CH...(2) und die Prioritätsrangfolge am Verbindungsknoten VK1 wird nicht geändert. Demzufolge läuft die nachfolgende Datenübertragung auf dem virtuellen Kanal CH...(0) am Verbindungsknoten VK1 auf eine Sperre, die bei einer Fortschaltung der virtuellen Prioritätsrangfolge abhängig von der Nachrichtenweiterleitung auf dem augenblicklich priorisierten virtuellen Übertragungskanal CH...(2) nicht behoben werden kann.

Andererseits zeigt FIG 10, daß es ebenfalls zu einer Sperrsituation führen kann, wenn ein belegter virtueller Übertragungskanal des Prioritätsranges v = 0 solange bevorrechtigt bleibt, bis das Rückwärtssignal ACK... eingetroffen ist. Angenommen sei hierbei, daß am Verbindungsknoten VK2 eine Nachrichtenübertragung auf dem virtuellen Kanal CH...(2) entsprechend der Einstellung v = 2 bevorrechtigt ist und daß danach am Verbindungsknoten VK1 mit der Weiterleitung dieser Nachricht auf den bevorzugten nächsten Prioritätsrang v = 0 weitergeschaltet worden ist. Eine am Verbindungsknoten VK1 nachfolgend über den jetzt bevorrechtigten virtuellen Kanal CH...(0) weitergeleitete Nachricht läuft dann zwangsläufig am Verbindungsknoten VK2 auf die Sperre durch den dort bevorrechtigten virtuellen Kanal CH...(2), die nicht aufgehoben werden kann, weil wegen des ausbleibenden Rückwärtssignales ACK am Verbindungsknoten VK1 der virtuelle Übertragungskanal CH...(2) nicht mehr durchgeschaltet werden kann usw..

Im beiden Fällen muß es daher zusätzlich möglich sein, über denselben ankommenden physikalischen Übertragungskanal zum selben abgehenden physikalischen Übertragungskanal weiterzuleitende Nachrichten auch dann weiterzuleiten, wenn für diesen physikalischen Übertragungsweg bereits eine andere Nachricht auf einem anderen virtuellen Kanal anhängig ist. Auf diese Weise können insbesondere Nachrichten über virtuelle Übertragungskanäle des höchsten Prioritätsranges Nachrichten auf virtuellen Übertragungskanälen eines niedrigeren virtuellen Prioritätsranges überholen, so daß sonst mögliche Sperren in einfacher Weise umgangen werden.

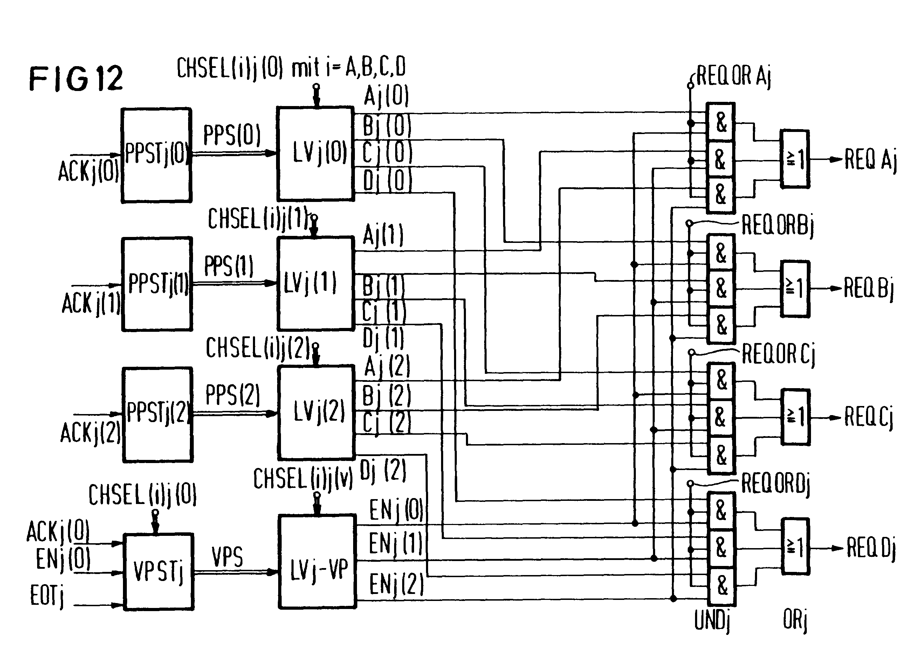

Diese Steuerung wird mit Bezug auf ein Multiprozessorsystem durch eine die Auswahleinrichtungen CHSEL-ST(v) in FIG 5 ergänzende Überwachungsschaltung ÜST bewirkt, die ähnlich wie die Auswahleinrichtungen aufgebaut und in FIG 11 dargestellt ist.

Alle Anforderungsleitungen REQ0 bis REQ2 werden in diesem Falle durch ein ODER-Glied OR1 gebündelt, das damit überwacht, ob eine Anforderung vorliegt. Parallel dazu werden die jeweiligen Steuerinformationen in ein Register REGz übernommen, so daß anhand der jeweiligen Zielinformation - wie bereits anhand von FIG 6 beschrieben - der jeweils zugehörige abgehende physikalische Übertragungskanal unabhängig von der Zuordnung zu einem virtuellen Übertragungskanal ermittelt werden kann. Diese individuellen Kanalsignale werden dann abhängig vom Ausgangssignal des ODER-Gliedes OR1 durch das jeweilige UND-Glied UND1 als Signal REQORi(j) freigegeben und wirken ebenfalls neben den virtuellen Wegesignalen CHSEL(i)(j)(v) auf die Prioritätssteuerung PRIO-ST ein.

Der Aufbau dieser Prioritätssteuerung PRIO-ST ist in FIG 12 ausführlicher dargestellt. Gezeigt ist jedoch lediglich der sich auf einen der abgehenden physikalischen Übertragungskanäle CHj beziehende Teil. Die gesamte Prioritätssteuerung besteht daher entsprechend der Anzahl der abgehenden Übertragungskanäle aus mehreren solcher Teilsteuerungen.

Für jeden benötigten virtuellen Prioritätsrang v = 0 bis v = 2 ist eine Vorrangschaltung zur Ermittlung des ankommenden Übertragungskanales CHi mit der jeweils höchsten augenblicklichen physikalischen Priorität innerhalb der einzelnen virtuellen Prioritätsränge und eine gemeinsame Vorrangschaltung zur Ermittlung des augenblicklich bevorrechtigten virtuellen Prioritätsranges anhand der vorliegenden virtuellen Wegesignale CHSEL(i)j(v) aller ankommenden Kanäle CH(i) für den abgehenden Kanal CHj vorgesehen. Diese Vorrangschaltungen bestehen jeweils aus einer Steuerschaltung PPSTj(v) bzw. VPSTj zur Änderung der jeweiligen Rangfolge der ankommenden physikalischen Kanäle CH(i) bzw. der virtuellen Prioritätsränge v und einer nachgeschalteten Verknüpfungsschaltung LVj(v) bzw. LVj-VP zur Bewertung der virtuellen Wegesignale CH(i)j(v) abhängig von der jeweils bestehenden Prioritätsrangfolge.

Die Steuerschaltungen PPSTj(v) zur Änderung der physikalischen Prioritätsrangfolgen werden jeweils beim Eintreffen eines Rückwärtssignales ACKj(v) über den belegten abgehenden virtuellen Kanal CHj(v) weitergeschaltet. Sie können z.B. aus einem zyklisch arbeitenden Zähler bestehen, wobei jedem ankommenden physikalischen Kanal einer der Zählerstände zugeordnet ist und der jeweilige Zählerstand den jeweils bevorrechtigten Kanal und die zugehörige Prioritätsrangfolge für die übrigen Kanäle kennzeichnet. Statt eines Zählers kann auch ein Ringschieberegister verwendet werden, wobei jedem ankommenden Kanal eine Stufe zugeordnet ist und ein zyklisch wanderndes Steuerbit den jeweils bevorrechtigten Kanal und die zugehörige Prioritätsrangfolge anzeigt.

Jede Schaltstellung entspricht dabei also einem vorgegebenen Prioritätszustand PPS(v) für die physikalischen Prioritäten der einzelnen ankommenden Übertragungskanäle.

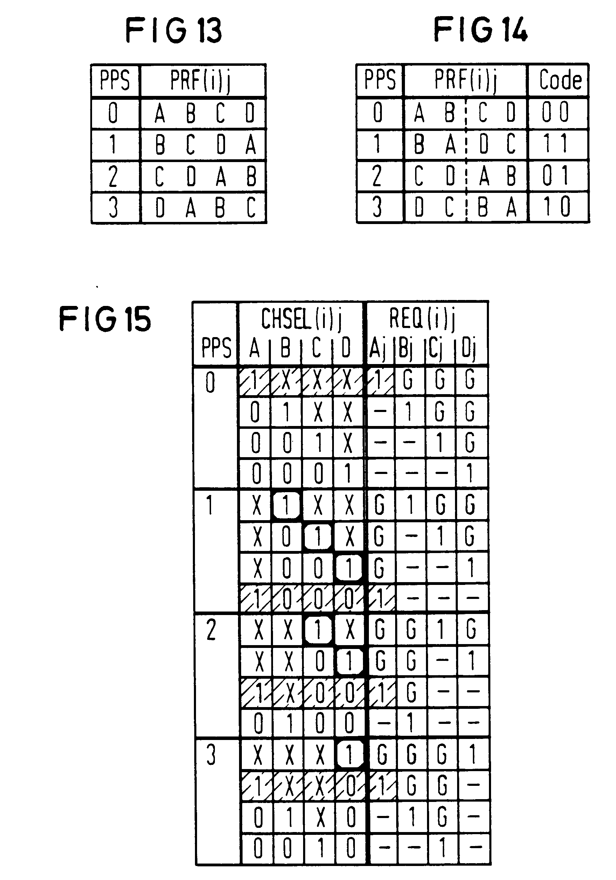

FIG 13 und FIG 14 zeigen in Tabellenform die diesen Prioritätszuständen PPS... beispielsweise entsprechenden Prioritätsrangfolgen PRF(i)j für die ankommenden Kanäle entsprechend i = A, B, C und D, wobei gemäß FIG 13 die Rangfolge zyklisch geändert wird, während gemäß FIG 14 Gruppen gebildet sind, innerhalb derer eine zyklische Vertauschung vorgenommen wird und die insgesamt zyklisch vertauscht werden. Wie in FIG 14 durch die rechte Spalte zusätzlich angedeutet ist, können die einzelnen Prioritätszustände PPS... auch durch einen Code statt durch eine "1 aus n"-Markierung gekennzeichnet sein. Entscheidend bei der Bildung der verschiedenen Prioritätsrangfolgen PRF.. ist allein, daß jeweils immer ein anderer Übertragungskanal der höchstpriorisierte Kanal und damit gegenüber allen anderen bevorrechtigt ist.

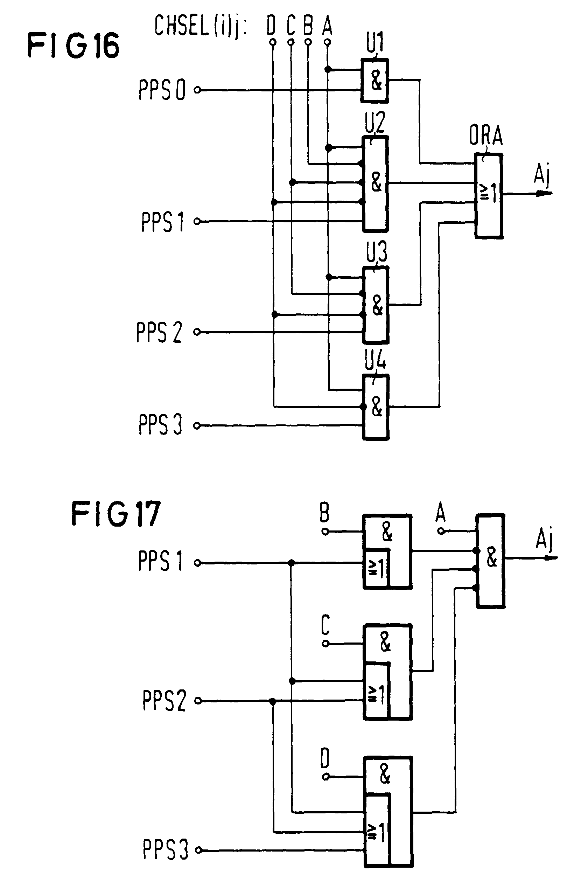

FIG 15 zeigt eine auf das Beispiel von FIG 13 bezogene Wahrheitstabelle für die Verknüpfungsschaltungen LVj(v) von FIG 12. Bei einheitlicher Belegung aller physikalischen Kanäle mit virtuellen Kanälen sind diese Verknüpfungsschaltungen alle gleich aufgebaut. Mit Bezug auf die Belegung gemäß FIG 3 und FIG 4 ergeben sich aber Abweichungen voneinander für die einzelnen virtuellen Ränge v = 0 bis v = 2 und damit für die einzelnen Vorrangschaltungen.

Ausgehend von den einzelnen Prioritätszuständen PPS = 0, 1, 2 und 3 sind die zu bewertenden virtuellen Wegesignale CHSEL(i)j eines virtuellen Prioritätsranges mit den Kanälen i = A, B, C und D als weitere Eingangssignale dargestellt, die entsprechend dem jeweils herschenden Prioritätszustand PPS... bewertet werden und zu den im rechten Teil aufgezeigten Ergebnissignalen REQ(i)j führen. Beim Zustand PPS = 0 ist gemäß FIG 13 der Kanal A am höchsten priorisiert und dieser wird ausgewählt, wenn eine Anforderung entsprechend A = 1 vorliegt, unabhängig davon ob auf den übrigen Kanälen B, C und D weitere Anforderungen vorliegen. In der ersten Zeile ist daher für diese Kanäle der Wert X eingetragen, um zu kennzeichnen, daß der Anforderungszustand dieser Kanäle für die Auswertung ohne Bedeutung ist. Entsprechend sind diese Kanäle zu sperren, was im rechten Teil mit einem G gekennzeichnet ist. Liegt gemäß den folgenden drei Zeilen keine Anforderung für den Kanal A entsprechend A = 0 vor, dann kommt in der gültigen Prioritätsrangfolge der jeweils nächstfolgende Kanal zum Zuge, von dem eine Anforderung vorliegt, also gemäß der zweiten Zeile der Kanal B, gemäß der dritten Zeile der Kanal C und gemäß der vierten Zeile der Kanal D. Analoges gilt für die übrigen Prioritätszustände PPS = 1 bis PPS = 3.

Wie FIG 15 zeigt, wird beispielsweise der ankommende Kanal A entsprechend Aj = 1 im rechten Teil dann ausgewählt, wenn die sich aus den durch Schrägstriche gekennzeichneten Zeilen ergebenden Bedingungen erfüllt sind. Der auf einen ankommenden Kanal, z.B. A, bezogene Teilaufbau einer entsprechenden logischen Verknüpfungsschaltung LVj(v) ist in FIG 16 dargestellt, wobei analoges für die die übrigen Kanäle berücksichtigenden Ergänzungen gilt.

Je Prioritätszustand PPS... ist ein UND-Glied, z.B. U1 bis U4, vorgesehen, deren Ausgänge durch ein gemeinsames ODER-Glied ORA gebündelt werden. Welches der UND-Glieder U1 bis U4 dabei aufgesteuert wird, hängt vom jeweiligen Prioritätszustand PPS... und den eine Anforderung signalisierenden Wegesignalen CHSEL(i)j für die einzelnen Kanäle A bis D ab.

Eine andere, zum selben Ergebnis führende Verknüpfungsmöglichkeit ergibt sich aus den Ergebnisspalten REQ(i)j für die einzelnen Kanäle A bis D von FIG 15. Danach ist dem Prioritätszustand PPS = 0 eine für den Kanal A vorliegende Anforderung durch keine andere Anforderung verdrängbar, während in den anderen Prioritätszuständen eine Anforderung durch den Kanal A entsprechend den Einträgen G gesperrt werden kann, wenn die im linken Teil der Tabelle umrahmten Kanalanforderungen vorliegen. D.h. eine Anforderung, z.B. vom Kanal A, wird durchgelassen, wenn sie nicht gesperrt wird, und zwar durch eine Anforderung vom Kanal B im Prioritätszustand PPS = 1 oder durch eine Anforderung vom Kanal C in den Prioritätszuständen PPS = 1 und PPS = 2 oder durch eine Anforderung vom Kanal D in den Prioritätszuständen PPS = 1 bis PPS = 3. Ein entsprechender Teilaufbau für die logische Verknüpfungsschaltung LVj(v) von FIG 12 zeigt FIG 17.

Die Vorrangschaltung für die Ermittlung des jeweils bevorrechtigten ankommenden virtuellen Kanals können bei Verwendung gleichrangiger virtueller Kanäle in gleicher Weise aufgebaut sein. Bei Zugrundelegung des bereits erläuterten Multiprozessorsystems sind jedoch die bereits erläuterten gesonderten Bedingungen zu berücksichtigen. Das heißt die Umschaltung von einem virtuellen Prioritätszustand in den nächsten erfolgt normalerweise mit dem von der Weiterleitung einer Nachricht über den belegten abgehenden virtuellen Kanal abgeleiteten Signal, z.B. dem Endesignal EOT. Wenn jedoch der höchste virtuelle Prioritätsrang v = 0 bevorrechtigt ist und eine Anforderung hierfür vorliegt, wird erst mit dem Rückwärtssignal ACKj(0) fortgeschaltet.

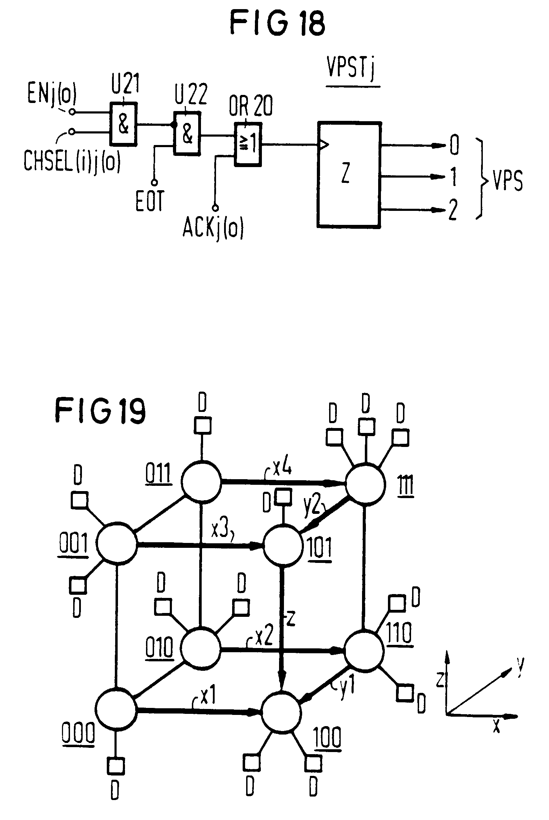

FIG 18 zeigt eine entsprechende Schaltungsanordnung für die Steuerschaltung VPSTj von FIG 12. Hauptbestandteil ist wiederum ein zyklisch arbeitendes Schaltelement, z.B. ein Zähler Z, das zyklisch nacheinander die die einzelnen virtuellen Prioritätsrangfolgen kennzeichnenden Prioritätszustände VPS0 bis VPS2 anzeigt. Die Fortschaltung erfolgt mit dem Endesignal EOT, wenn das UND-Glied U21 nicht gesperrt ist. Das UND-Glied U21 überwacht das Vorliegen des den höchsten Prioritätsrang v = 0 bevorrechtigenden Prioritätszustand VPS0, der durch das Signal ENj(0) am Ausgang der Verknüpfungsschaltung LVj-VP in FIG 12 abgeleitet wird, und das gleichzeitige Vorliegen einer Anforderung von einem virtuellen Kanal dieses Prioritätsranges, was anhand der Wegesignale CHSEL(i)j(0) erkannt wird. Ist diese Bedingung erfüllt und das UND-Glied U22 entsprechend gesperrt, kommt die Fortschaltung mit dem Rückwärtssignal ACKj(0) über das ODER-Glied OR20 zum Tragen. Die nachgeschaltete logische Verknüpfungsschaltung LVj-VP in FIG 12 kann dagegen in gleicher Weise realisiert werden wie die für die physikalischen Prioritäten, wobei die Freigabesignale ENj(0) bis ENj(2) den jeweils bevorrechtigten virtuellen Prioritätsrang kennzeichnen.

Wie FIG 12 weiterhin erkennen läßt, arbeiten die einzelnen Vorrangschaltungen unabhängig voneinander, indem von den ankommenden virtuellen Kanälen Aj(v) bis Dj(v) innerhalb eines jeden Prioritätsranges, z.B. v = 0, zunächst jeweils der Kanal, z.B. Aj(0), mit der bevorrechtigten physikalischen Priorität ermittelt wird. Anschließend wird dann anhand des jeweils bevorrechtigten virtuellen Prioritätsranges mit dem entsprechenden Freigabesignal, z.B. ENj(0), der in der zugehörigen Gruppe ermittelte Kanal Aj(0) mit der bevorrechtigten physikalischen Priorität ausgewählt. Diese Auswahl steuern die UND-Glieder UNDj mit den nachgeschalteten ODER-Gliedern ORj, die eines der Ergebnissignale REQ Aj bis REQ Dj für die pyhsikalische Wegedurchschaltung liefern.

Um zusätzlich die anhand von FIG 9 und FIG 10 erläuterten Bedingungen zu erfüllen, werden die von der Überwachungssteuerung ÜST gemäß FIG 11 gelieferten Steuersignale REQOR(i)j als kanalbezogene Signale REQOR Aj bis REQOR Dj den entsprechenden Gruppen von UND-Gliedern UNDj in FIG 12 parallel zugeführt. Auf diese Weise wird sichergestellt, daß ein Ergebnissignal, z.B. REQ Aj, auch dann geliefert wird, wenn beispielsweise entsprechend einer bestehenden Belegung zwar die Bedingung Aj(2) ∧ ENj(2) erfüllt ist, sich aber die augenblickliche Anforderung von Kanal A für denselben physikalischen Übertragungsweg auf den virtuellen Übertragungsweg eines anderen Prioritätsranges bezieht, also v ≠ 2 gegeben ist.

Wie bereits erwähnt, besteht eine weitgehende Gestaltungsmöglichkeit bezüglich des Verbindungsnetzes zur Verbindung der Verbindungsknoten untereinander und der Zuordnung der Verbindungskanäle zu den einzelnen Übertragungswegen - was in der bereits erwähnten parallelen europäischen Patentanmeldung (GR 90 P 1680 E) ausführlich beschrieben ist.

Danach sind Netzwerke, bei denen die einzelnen Verbindungsknoten Eckpunkte eines n-dimensionalen boolschen Würfels mit n-Verbindungskanälen an jedem Verbindungsknoten bilden, besonders vorteilhaft. Jeder Verbindungsknoten kann dann durch eine binäre, aus jeweils n Bits bestehende Adresse gekennzeichnet werden, wobei jede Bitstelle einer Koordinate und damit einem Verbindungskanal des n-dimensionalen Netzwerkes entspricht. Zur Auswahl des jeweils abgehenden Verbindungskanals werden jeweils die Bitstellen der Zielknotenadresse und der Adresse des jeweils erreichten Verbindungsknotens verglichen, wobei bei einer vorgegebenen Rangfolge der Bitstellen jeweils die ranghöchste der voneinander abweichenden Bitstellen den auszuwählenden Verbindungskanal bestimmt.

FIG 19 zeigt das entsprechende Netzwerk für ein Oktoprozessorsystem, das von einem Monoprozessorsystem ausgehend, dessen Verbindungsknoten als Vorleistung Anschlüsse für drei Verbindungskanäle Kx, Kj und Kz aufweist, durch fortlaufende Erweiterung gebildet werden kann. Selbstverständlich sind auch noch andere Netzkonfigurationen nach dem selben Bildungsschema möglich, und vor allem ist die Anzahl der Dimensionen n nicht auf drei beschränkt. Derartige Netzwerke haben den großen Vorteil, daß für einen verklemmungsfreien Nachrichtenaustausch im Netz keine zusätzlichen virtuellen Kanäle benötigt werden.

Wie FIG 19 zeigt, können an die einzelnen Verbindungsknoten "000" bis "111" unterschiedlich viele Einheiten D angeschlossen sein. Über die beispielsweise am Verbindungsknoten "100" ankommenden Verbindungskanäle x1, y1 und Z können Nachrichten von allen Einheiten D an den anderen Verbindungsknoten eintreffen, die an abgehende Kanäle weiterzuleiten sind. So kann über den ankommenden Kanal x1 nur die eine Einheit am Verbindungsknoten "000" eine Anforderung auslösen. Über den Kanal y1 können es dagegen die beiden Einheiten am Verbindungsknoten "110" und zusätzlich die beiden Einheiten am Verbindungsknoten "010" über den vorgeschalteten Kanal x2, so daß die über den Kanal y1 eintreffenden Anforderungen von insgesamt vier verschiedenen Einheiten stammen können. Beim Kanal z erhöht sich die Zahl der eine Anforderung auslösenden Einheiten nochmals, nämlich eine Einheit am Verbindungsknoten "101", zwei Einheiten am Verbindungsknoten "001", drei Einheiten am Verbindungsknoten "111" und letztlich eine Einheit am Verbindungsknoten "011", also insgesamt 7 Einheiten.

Würde man in einem solchen Fall die Bevorrechtigung der einzelnen Kanäle in der bereits beschriebenen Weise ändern, dann ergäben sich für die einzelnen Einheiten D des Systems mit Bezug auf die einer vorgegebenen Systembelastung entsprechenden mittleren Wartezeit sehr unterschiedliche Wartezeiten bis zur erfolgreichen Ausführung einer Nachrichtenübertragung.

Diese Wartezeiten lassen sich z.B. verkürzen und der mittleren Wartezeit annähern, wenn der physikalische Prioritätszustand für die ankommenden Verbindungskanäle in jedem Verbindungsknoten nicht mit jedem Rückwärtssignal ACK...geändert wird, sondern abhängig von einer der Anzahl der möglicherweise über einen ankommenden Verbindungskanal Anforderungen auslösenden Einheiten entsprechenden Anzahl von Rückwärtssignalen.

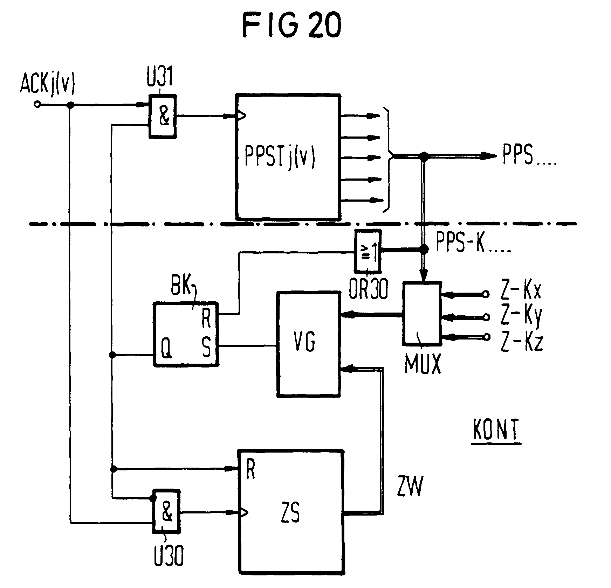

FIG 20 zeigt eine zusätzliche Steuerschaltung KONT, die jeder Steuerschaltung PPSTj(v) von FIG 12 zugeordnet werden kann. Diese Steuerschaltung KONT besteht aus einer Zählschaltung ZS, die die eintreffenden zugehörigen Rückwärtssignale ACKj(v) normalerweise zählt, wenn das UND-Glied U30 nicht gesperrt ist.

Mit jeder Änderung der Prioritätsrangfolge durch die Steuerschaltung PPSTj(v) wird bei Bevorrechtigung eines ankommenden Verbindungskanals anhand der Kennung PPS-K... ein Auswahlschalter MUX eingestellt, der eine die Anzahl der über den jeweiligen Verbindungskanal durchschaltbaren Einheiten anzeigende Kennzahl, z.B. Z-Kx für den Verbindungskanal Kx, zu einem Vergleicher VG durchschaltet. Dieser vergleicht den von der Zählschaltung ZS jeweils registrierten Wert ZW mit der jeweils gültigen Anzahl Z-K... und setzt bei Gleichstand eine bistabile Kippstufe BK. Diese sperrt im gesetzten Zustand das UND-Glied U30 und setzt die Zählschaltung ZS zurück. Gleichzeitig wird das UND-Glied U31 freigegeben, so daß die Steuerschaltung PPSTj(v) in den nächsten Prioritätszustand PPS... mit neuer Rangfolge umschalten kann. Jedes Mal, wenn der eingestellte Prioritätszustand PPS einen Verbindungskanal bevorrechtigt, dann wird über das ODER-Glied OR30 die bistabile Kippstufe BK zurückgesetzt und die Steuerschaltung KONT erneut freigegeben.

## Patentansprüche

1. Kommunikationssystem, bestehend aus einem Netz von mehreren, über Verbindungskanäle (K...) als bidirektionale Übertragungskanäle (CH...) miteinander verbundenen Verbindungsknoten (VK...), zum Übertragen von Nachrichten zwischen jeweils zwei Einheiten (z.B. M1 und CPU2), die über bidirektionale Ubertragungskanäle (CH...) an die Verbindungsknoten (VK...) angeschlossen sind,
- wobei die jeweils zu übertragende Nachricht in Teile konstanter Länge aufgeteilt, jeder Nachricht eine Steuerinformation in der Länge eines Nachrichtenteils vorangestellt und das jeweils letzte Nachrichtenteil einer Nachricht als solches gekennzeichnet wird (z.B. mit E0T),
- wobei die Steuerinformation und die zugehörigen Nachrichtenteile (DAT0..DAT8) jeweils ohne Unterbrechung nacheinander von der jeweils sendenden Einheit (z.B. M1) ausgesendet und in jedem erreichten Verbindungsknoten (VK...) nach Ermittlung des abgehenden Übertragungskanals anhand der Steuerinformation unmittelbar in Richtung zur Zieleinheit (z.B. CPU2) weitergeleitet werden,
- wobei das Eintreffen einer Nachricht an einer Zieleinheit (z.B. CPU2) von dieser durch ein Rückwärtssignal (ACK) über den aufgebauten Übertragungsweg an die sendende Einheit (M1) gemeldet wird, und
- wobei bei Ausbleiben des Rückwärtssignales (ACK) bis zu einem vorgegebenen Zeitablauf nach Aussendung einer Nachricht die Aussendung der gesamten Nachricht automatisch wiederholt wird, bis das Rückwärtssignal (ACK) rechtzeitig eintrifft,
**dadurch gekennzeichnet**,
daß die für die Durchschaltung eines jeden ankommenden übertragungskanales (z.B. CHi) zu einem abgehenden Ubertragungskanal (z.B. CHj) maßgebende Prioritätsrangfolge (PRF) der an einen Verbindungsknoten (VK...) ankommenden Übertragungskanäle (CH(i)) mit Bezug auf jeden abgehenden Ubertragungskanal (CH(j)) durch jedes über diesen Kanal eintreffende Rückwärtssignal (ACKj) zyklisch geändert wird, so daß nacheinander jeder ankommende Ubertragungskanal gegenüber allen übrigen mit
Bezug auf jeden abgehenden Ubertragungskanal bevorrechtigt ist, wobei in jedem Verbindungsknoten (VK...) für jeden ankommenden und für jeden abgehenden Ubertragungskanal (z.B. CH1 und CH3) Pufferspeicher (EREG1 bzw. SREG3) für einzelne Teilnachrichten zur Überbrückung des infolge der Verbindungsherstellung zu einem abgehenden freien Ubertragungskanal bedingten Weiterleitungsvorganges verwendet werden.

2. Kommunikationssystem nach Anspruch 1,
**dadurch gekennzeichnet**, daß jeweils bei Bevorrechtigung eines Verbindungskanales (VK...) als ankommender Übertragungskanal (CHi) die bestehende Prioritätsrangfolge erst nach Eintreffen einer der Anzahl (z.B. 7) der mit diesem Verbindungskanal (VK...) möglicherweise verbindbaren sendenden Einheiten (D) in anderen Verbindungsknoten (VK...) entsprechenden Anzahl (Z) von Rückwärtssignalen (ACKj) geändert wird.

3. Kommunikationssystem nach Anspruch 1 oder 2,
**dadurch gekennzeichnet**, daß bei Betrieb der physikalischen Übertragungskanäle (CH(i)) als virtuelle Übertragungskanäle (CH(i)(v)) in jedem Verbindungsknoten (VK...) mit Bezug auf jeden abgehenden virtuellen Übertragungskanal (CHj(v)) die jeweilige Prioritätsrangfolge der verschiedenen virtuellen Übertragungskanäle der jeweils gültigen Prioritätsrangfolge (PRF) der physikalischen Übertragungskanäle (CH(i)) in der Weise überlagert wird, daß jeweils innerhalb der Gruppe von virtuellen Übertragungskanälen (CH(i)v) gleicher Ordnungszahl (z.B. v = 1) der jeweils bevorrechtigte ankommende physikalische Übertragungskanal (z.B. CHA(1)) ermittelt und von diesen jeweils der (z.B. CHA1) innerhalb der jeweils bevorrechtigten Gruppe von virtuellen Übertragungskanälen (z.B. CH(i)1) ausgewählt wird, und daß die Prioritätsrangfolge der ankommenden Gruppe von virtuellen Übertragungskanälen durch jedes über den bereitgestellten abgehenden Übertragungskanal (CHj) einRückwärtssignal (ACK(v)) zyklisch geändert wird.

4. Kommunikationssystem nach Anspruch 3,
**dadurch gekennzeichnet,** daß bei Verwendung unterschiedlicher virtueller Prioritätsränge (v) für die einzelnen Gruppen von virtuellen Übertragungskanälen (CH(j)(v)) gleicher Ordnungszahl in Systemen mit möglichen Annahmesperren an der Zieleinheit für Nachrichten über virtuelle Übertragungskanäle (CH(i)(v)) eines niedrigeren Prioritätsranges (z.B. v = 2) die Rangfolge der virtuellen Prioritätsränge (v) durch ein von der jeweils über den bereitgestellten abgehenden Übertragungskanal (CHj) weitergeleiteten Nachricht abgeleiteten Signal (z.B. Endesignal EOT) geändert wird.

5. Kommunikationssystem nach Anspruch 4,
für Multiprozessorsysteme mit in mehrere Speichereinheiten (M...) unterteiltem gemeinsamem Speicher (MM), dessen Speichereinheiten (M...) an verschiedene Verbindungsknoten (VK...) angeschlossen sind, an die Schreib- oder Leseaufträge als Primäraufträge von den ebenfalls an die einzelnen Verbindungsknoten (VK...) angeschlossenen operativen Einheiten (z.B. CPU..., IOP...) gerichtet werden, wobei von den Primäraufträgen zum Lesen von Daten abgeleitete und den direkten Transfer der Lesedaten betreffende Folgeaufträge über die virtuellen Übertragungskanäle (CH(i)(0)) mit dem höchsten virtuellen Prioritätsrang (v = 0) abgewickelt werden,
**dadurch gekennzeichnet,** daß die Rangfolge der virtuellen Prioritätsränge (v) bei augenblicklicher Bevorrechtigung des höchsten Prioritätsranges (v = 0) und bestehender Anforderung (CHSEL(i)j(0)) für einen abgehenden virtuellen Kanal (CHj(0)) dieses Prioritätsranges erst mit Eintreffen des Rückwärtssignales (ACKj(0)) über den belegten abgehenden virtuellen Übertragungskanal (CHj(0)) geändert wird und daß bei der Übertragung von Nachrichten über virtuelle Übertragungskanäle (CHj(v)) unterschiedlichen Prioritätsranges (z.B. v = 0 und v = 2) über denselben physikalischen Übertragungsweg zwischen einem ankommenden und abgehenden physikalischem Übertragungskanal (CHi/CHj) eine über den augenblicklich nicht priorisierten virtuellen Übertragungskanal (z.B. CHi2) ankommende Nachricht auch dann über den physikalischen Übertragungsweg weitergeleitet wird, wenn der abgehende physikalische Kanal (CHj) bereits für die Nachricht über den anderen augenblicklich priorisierten virtuellen Übertragungskanal (z.B. CHj0) belegt ist.

6. Kommunikationssystem nach einem der Ansprüche 3 oder 5,
**dadurch gekennzeichnet**, daß lediglich alle im Rahmen eines Übertragungsweges zwischen zwei Einheiten (z.B. M1 und CPU2) belegten virtuellen Übertragungskanäle (CH...(v)) belegt bleiben, bis das Rückwärtssignal (ACK...(v)) auf dem Weg zur sendenden Einheit eingetroffen ist, während die jeweils zugehörigen physikalischen Übertragungskanäle (CM...) nur solange belegt bleiben, bis das das Ende der Nachricht anzeigende Kennzeichen (EOT) über den jeweils belegten abgehenden Übertragungskanal weitergeleitet ist.

7. Kommunikationssystem nach einem der Ansprüche 3 bis 6,
**dadurch gekennzeichnet**, daß mit der Steuerinformation (FLIT...(v)) einer Nachricht und jedem Rückwärtssignal (ACK...) ein den Prioritätsrang (v) des jeweils benutzten virtuellen Übertragungskanales (CHi(v) bzw. CHj(v)) anzeigendes Kennzeichen (v) gekoppelt ist, das die Zuordnung der auf den physikalischen Übertragungskanälen (CH...) übertragenen Steuerinformationen und Nachrichten zu den einzelnen virtuellen Übertragungskanälen (CH...(v)) sicherstellt.

8. Kommunikationssystem nach Anspruch 7,
**dadurch gekennzeichnet**, daß das den Prioritätsrang einer Nachricht festlegende Kennzeichen (REQ...(v)) auf gesonderten Signalleitungen parallel zur Steuerinformation (FLIT...(v)) einer Nachricht übertragen wird und als Anforderungssignal die Wegeauswahl im jeweils erreichten Verbindungsknoten (VK...) einleitet.

9. Kommunikationssystem nach Anspruch 7 oder 8,
**dadurch gekennzeichnet,**
- daß für jeden in einem Verbindungsknoten (VK...) ankommenden physikalischen Übertragungskanal (CH...) eine der Anzahl (z. B. 3) der zugehörigen virtuellen Kanäle (CH...(v) mit v = 2, 1 oder 0) entsprechende Anzahl (3) von Auswahleinrichtungen (CHSEL-ST(v)) vorgesehen ist, von denen die jeweils zuständige anhand des den Prioritätsrang (v) festlegenden Kennzeichens (REQ...(v)) ausgewählt wird,
- daß die jeweils ausgewählte Auswahleinrichtung (z.B. CHSEL-ST(v0)) anhand der in der Steuerinformation enthaltenen Zieladresse (ZVKAD, UNAD) ein virtuelles Wegesignal (CHSELij(v)) erzeugt, das den jeweils ankommenden Kanal (CHi(v)) und den jeweils mit diesem zu verbindenden abgehenden Übertragungskanal (CHj(v)) kennzeichnet,
- daß alle auf diese Weise erzeugten virtuellen Wegesignale (CHSEL(i)(j)(v)) einer gemeinsamen Prioritätssteuerung (PRIO-ST) zugeleitet werden, die für jeden abgehenden freien Übertragungskanal (CHj(v)) den auf diesen durchzuschaltenden ankommenden Kanal (CHi(v)) mit der höchsten Priorität ermittelt und daß anhand des dann abgespeicherten Ergebnisses (REQij) der zugehörige physikalische Übertragungsweg für die Übertragung unter gleichzeitiger Sperrung aller übrigen, denselben abgehenden virtuellen Übertragungskanal (CHj(v)) betreffenden Wegesignale (CHSEL(i)j(v)) freigegeben wird.

10. Kommunikationssystem nach Anspruch 9,
**dadurch gekennzeichnet**, daß in der Prioritätssteuerung (PRIO-ST) eines jeden Verbindungsknotens (VK...) für jeden abgehenden physikalischen Kanal (z.B. CHj) jeweils eine der Anzahl (z.B. 3) der virtuellen Prioritätsränge (v) entsprechende Anzahl von Vorrangschaltungen zur Ermittlung des ankommenden Übertragungskanales (CHi) der jeweils höchsten augenblicklichen physikalischen Priorität innerhalb des jeweiligen virtuellen Prioritätsranges (v) und eine Vorrangschaltung zur Ermittlung des jeweils höchsten augenblicklichen virtuellen Prioritätsranges (z.B. v = 1) anhand der von den vorliegenden Anforderungen aller ankommenden Kanäle abgeleiteten virtuellen Wegesignale (CHSEL(i) j(v)) vorgesehen ist und daß ein den ermittelten bevorrechtigten virtuellen Prioritätsrang (z.B. v = 1) kennzeichnendes Signal (ENj(1)) den von der Vorrangschaltung für die physikalische Prioriät desselben virtuellen Prioritätsranges ermittelten ankommenden Übertragungskanal (z.B. Aj(1)) für die Durchschaltung auf den abgehenden Kanal (CHj) freigibt.

11. Kommunikationssystem nach Anspruch 10,
**dadurch gekennzeichnet**, daß die Vorrangschaltungen jeweils aus einer Steuerschaltung (PPSTj(v) bzw. VPSTj) zur Änderung der jeweiligen Rangfolge der ankommenden physikalischen Kanäle (CHi) bzw. der virtuellen Prioritätsränge (v) und einer nachgeschalteten logischen Verknüpfungsschaltung (LVj(v) bzw. LVj-VP) zur Bewertung der virtuellen Wegesignale (CHSEL(i)j(v)) abhängig von der jeweils vorgegebenen Prioritätsrangfolge bestehen, wobei die Steuerschaltungen (PPSTj(v)) zur Änderung der physikalischen Priorität mit jedem eintreffenden zugehörigen Rückwärtssignal (ACKj(v)) ihren Schaltzustand ändern, während die Steuerschaltung (VPSTj) zur Änderung der Rangfolge der virtuellen Prioritätsränge (v) bei Bevorrechtigung des höchsten Prioritätsranges (ENj(0)) und vorliegender Anforderung eines virtuellen Übertragungskanales dieses Prioritätsranges mit Eintreffen des zugehörigen Rückwärtssignales (ACKj(0)) und bei Bevorrechtigung der übrigen Prioritätsränge (ENj(1), ENj(2)) durch das von der über den abgehenden Kanal (CHj(v)) weitergeleiteten Nachricht abgeleitete Signal (z.B. Endesignal EOTj) ihren Schaltzustand ändert.

12. Kommunikationssystem nach Anspruch 11,
**dadurch gekennzeichnet**, daß die Steuerschaltungen (PPSTj bzw. VPSTj) zur Änderung der Rangfolge der ankommenden physikalischen Kanäle (CHi) bzw. der virtuellen Prioritätsränge (v) aus zyklisch arbeitenden Schalteinrichtungen mit einer der Anzahl aller ankommenden physikalischen Kanäle bzw. aller virtuellen Prioritätsränge entsprechenden Anzahl von Schaltzuständen bestehen, von denen jeder einer der verschiedenen Rangfolgen (z.B. PRF) entspricht, die sich ergeben, wenn jeder Übertragungskanal bzw. jeder Prioritätsrang einmal den höchsten Rang in der Folge einnimmt.

13. Kommunikationssystem nach einem der Ansprüche 10 bis 12,
**dadurch gekennzeichnet**, daß jede Vorrangschaltung (PPSTj(v)) zur Ermittlung des jeweils bevorrechtigten ankommenden physikalischen Übertragungskanals (CHi) mit einer Überwachungsschaltung (KONT) gekoppelt ist, die bei Bevorrechtigung eines ankommenden Verbindungskanals (K...) die Änderung der jeweiligen Prioritätsrangfolge (PRF) vorübergehend sperrt, bis eine der Anzahl (Z-K...) der mit diesem Verbindungskanal (K...) möglicherweise verbindbaren sendenden Einheiten (D) in anderen Verbindungsknoten (VK...) entsprechende Anzahl (Z) von zugehörigen Rückwärtssignalen (ACKj(v)) eingetroffen ist.

14. Kommunikationssystem nach einem der Ansprüche 6 bis 13 in Verbindung mit Anspruch 5,
**dadurch gekennzeichnet**, daß neben den Auswahleinrichtungen (CHSEL-ST(v)) je ankommendem physikalischem Übertragungskanal (CHi...) eine gesonderte Überwachungseinrichtung (ÜST) vorgesehen ist, die analog den Auswahleinrichtungen bei jeder eintreffenden Steuerinformation (FLIT...) den jeweils zugehörigen abgehenden physikalischen Übertragungskanal (CH(j)) ermittelt und ein entsprechendes Steuersignal (REQORi(j)) liefert, das in der Prioritätssteuerung (PRIO-ST) unabhängig vom jeweiligen Prioritätsrang (v) einer über den ankommenden physikalischen Übertragungskanal (CHi...) eintreffenden zugehörigen Nachricht den durch ein bevorrechtigtes virtuelles Wegesignal (z.B. CHSELij(0)) einer vorangehenden Nachricht ausgewählten und über denselben abgehenden physikalischen Übertragungskanal (CHj) verlaufenden physikalischen Übertragungsweg durchschaltet, so daß trotz bestehender Belegung der virtuellen Übertragungskanäle (CHi(0)) eines physikalischen Übertragungsweges (CHi/CHj) Nachrichten über virtuelle Übertragungskanäle (CHi(2)) eines anderen Prioritätsranges entlang desselben physikalischen Übertragungsweges in einem Verbindungsknoten (VK...) weitergeleitet werden können.

## Claims

1. Communication system comprising a network of a plurality of connecting nodes (VK...), interconnected via connecting channels (K...) as bidirectional transmission channels (CH...), for transmitting messages between in each case two units (for example M1 and CPU2) which are connected via bidirectional transmission channels (CH...) to the connecting nodes (VK...),
- the message to be respectively transmitted being divided into sections of constant length, each message being prefixed by an item of control information of a length of a message section, and the respectively last message section of a message being marked as such (for example by EOT),
- the control information and the associated message sections (DAT0...DAT8) each being transmitted without interruption sequentially by the respectively transmitting unit (for example M1) and being relayed immediately in the direction of the destination unit (for example CPU2) at each connecting node (VK...) reached, after determining the outgoing transmission channel with the aid of the control information,
- the arrival of a message at a destination unit (for example CPU2) being signalled by the latter by a backward signal (ACK) via the transmission path set up to the transmitting unit (M1), and
- in the absence of the backward signal (ACK) up to a prescribed time lapse after transmission of a message, the transmission of the entire message is automatically repeated until the backward signal (ACK) arrives at the correct time,
characterized in that the priority sequence (PRF), decisive for switching through each of the incoming transmission channels (for example CHi) to an outgoing transmission channel (for example CHj), of the transmission channels (CH(i)) incoming at a connecting node (VK...) is cyclically changed relative to each outgoing transmission channel (CH(j)) by each backward signal (ACKj) incoming via this channel, with the result that each incoming transmission channel is sequentially prioritized with respect to all the remaining ones relative to each outgoing transmission channel, use being made at each connecting node (VK...) for each incoming and for each outgoing transmission channel (for example CH1 and CH3) of buffers (EREG1 and SREG3, respectively) for individual part messages for the purpose of bridging the relaying operation caused by making the connection to an outgoing free transmission channel.

2. Communication system according to Claim 1, characterized in that when a connecting channel (V...) is prioritized as an incoming transmission channel (CHi) the existing priority sequence is in each case not changed until the arrival of a number (Z) of backward signals (ACKj) which corresponds to the number (for example 7) of the transmitting units (D), which can possibly be connected to this connecting channel (V...), in other connecting nodes (VK...).

3. Communication system according to Claim 1 or 2, characterized in that when the physical transmission channels (CH(i)) are operated as virtual transmission channels (CH(i) (v)), the respective priority sequence of the different virtual transmission channels of the respectively valid priority sequence (PRF) of the physical transmission channels (CH(i)) is superimposed at each connecting node (VK...) relative to each outgoing virtual transmission channel (CH(j)(v)) in such a way that the respectively prioritized incoming physical transmission channel (for example CHA(1)) is determined in each case within the group of virtual transmission channels (CH(i)v) of equal ordinal number (for example v = 1), and of these prioritized incoming physical transmission channels that one (for example CHA1) is respectively selected which is within the respectively prioritized group of virtual transmission channels (for example CH(i)1), and in that the priority sequence of the incoming group of virtual transmission channels is cyclically changed by each backward signal (ACK(v)) arriving via the outgoing transmission channel (CHj) provided.

4. Communication system according to Claim 3, characterized in that given the use of different virtual priority levels (v) for the individual groups of virtual transmission channels (CH(j)(v)) of equal ordinal number in systems having possible acceptance blocks at the destination unit for messages via virtual transmission channels (CH(i)(v)) of a lower priority level (for example v = 2), the sequence of the virtual priority levels (v) is changed by a signal (for example end signal EOT) derived from the message respectively relayed via the outgoing transmission channel (CHj) provided.

5. Communication system according to Claim 4, for multiprocessor systems having a common memory (MM) which is subdivided into a plurality of memory units (M...) and whose memory units (M...) are connected to different connecting nodes (VK...) to which read or write orders are directed as primary orders from the operative units (for example CPU..., IOP...) likewise connected to the individual connecting nodes (VK...), secondary orders derived from the primary orders for reading data and relating to the direct transfer of reading data being handled via the virtual transmission channels (CH(i)(0)) with the highest virtual priority level (v = 0), characterized in that the sequence of the virtual priority levels (v) is not changed, in the case of instantaneous prioritization of the highest priority level (v = 0) and of the existing request (CHSEL(i)j(0)) for an outgoing virtual channel (CHj(0)) of this priority level, until the arrival of the backward signal (ACKj(0)) via the busy outgoing virtual transmission channel (CHj(0)), and in that in the case of the transmission of messages via virtual transmission channels (CHj(v)) of different priority level (for example v = 0 and v = 2) via the same physical transmission path between an incoming and outgoing physical transmission channel (CHi/CHj), a message incoming via the instantaneously not prioritized virtual transmission channel (for example CHi2) is relayed via the physical transmission path even if the outgoing physical channel (CHj) is already busy for the message via the other instantaneously prioritized virtual transmission channel (for example CHj0).

6. Communication system according to one of Claims 3 or 5, characterized in that only all the virtual transmission channels (CH...(v)) which are busy within the framework of a transmission path between two units (for example M1 and CPU2) remain busy until the backward signal (ACK...(v)) has arrived on the path to the transmitting unit, while the respectively associated physical transmission channels (CH...) remain busy only until the identifier (EOT) indicating the end of the message is relayed via the respectively busy outgoing transmission channel.

7. Communication system according to one of Claims 3 to 6, characterized in that coupled to the control information (FLIT...(v)) of a message and to each backward signal (ACK...) is an identifier (v) which indicates the priority level (v) of the respectively used virtual transmission channel (CHi(v) and CHj(v), respectively) and ensures the assignment of the control information and messages transmitted on the physical transmission channels (CH...) to the individual virtual transmission channels (CH...(v)).

8. Communication system according to Claim 7, characterized in that the identifier (REQ...(v)) fixing the priority level of a message is transmitted on separate signal lines in parallel with the control information (FLIT...(v)) of a message and initiates the path selection as request signal in the connecting node (VK...) respectively reached.

9. Communication system according to Claim 7 or 8, characterized
- in that there is provided for each physical transmission channel (CH...) incoming at a connecting node (VK...) a number (3), corresponding to the number (for example 3) of the associated virtual channels (CH...(v) where v = 2, 1 or 0), of selection devices (CHSEL-ST(v)) of which that respectively appropriate one is selected with the aid of the identifier (REQ...(v)) which fixes the priority level (v),
- in that the respectively selected selection device (for example CHSEL-ST(v0)) uses the destination address (ZVKAD, UNAD) contained in the control information to generate a virtual path signal (CHSELij(v)) which marks the respectively incoming channel (CHi(v)) and the outgoing transmission channel (CHj (v)) to be connected respectively to the latter,
- in that all the virtual path signals (CHSEL(i)(j)(v)) generated in this way are fed to a common priority controller (PRIO-ST) which determines for each outgoing free transmission channel (CHj(v)) the incoming channel (CHi(v)), to be switched through to the latter, with the highest priority, and in that the result (REQij) then stored is used to release the associated physical transmission path for transmission in conjunction with the simultaneous blocking of all the remaining path signals (CHSEL(i)(j)(v)) relating to the same outgoing virtual transmission channel (CHj(v)).

10. Communication system according to Claim 9, characterized in that there are respectively provided in the priority controller (PRIO-ST) of each of the connecting nodes (VK...) for each outgoing physical channel (for example CHj) a number, corresponding to the number (for example 3) of the virtual priority levels (v), of priority circuits for determining the incoming transmission channel (CHi) of the respectively highest instantaneous physical priority within the respective virtual priority level (v), and a priority circuit for determining the respectively highest instantaneous virtual priority level (for example v = 1) with the aid of the virtual path signals (CHSEL(i)(j)(v)) derived from the existing requests of all the incoming channels, and in that a signal (ENj(1)) marking the prioritized virtual priority level (for example v = 1) determined releases the incoming transmission channel (for example Aj(1)) determined by the priority circuit for the physical priority of the same virtual priority level for switching through to the outgoing channel (CHj).

11. Communication system according to Claim 10, characterized in that the priority circuits respectively comprise a control circuit (PPSTj(v) or VPSTj) for changing the respective sequence of incoming physical channels (CHi) or the virtual priority levels (v), and a downstream logic combinational circuit (LVj(v) or LVj-VP) for evaluating the virtual path signals (CHSEL(i)(j)(v)) independently of the respectively prescribed priority sequence, the control circuits (PPSTj(v)) for changing the physical priority changing their circuit state with each associated backward signal (ACKj(v)) arriving, while the control circuit (VPSTj) for changing the sequence of the virtual priority levels (v) changes its circuit state with the arrival of the associated backward signals (ACKj(0)) in the case of prioritizing the highest priority level (ENj(0)) and of an existing request of a virtual transmission channel of this priority level, and changes its circuit state by means of the signal (for example end signal EOTj) derived from the message relayed via the outgoing channel (CHj(v)) in the case of prioritizing the remaining priority levels (ENj(1), ENj(2)).

12. Communication system according to Claim 11, characterized in that the control circuits (PPSTj or VPSTj) for changing the sequence of the incoming physical channels (CHi) or of the virtual priority levels (v) comprise cyclically operating switching devices having a number, corresponding to the number of all the incoming physical channels or all the virtual priority levels, of circuit states, of which each corresponds to one of the different sequences (for example PRF) which are produced when each transmission channel or each priority level assumes the highest level in the sequence once.

13. Communication system according to one of Claims 10 to 12, characterized in that each priority circuit (PPSTj(v)) for determining the respectively prioritized incoming physical transmission channel (CHi) is coupled to a monitoring circuit (KONT) which in the case of prioritizing an incoming connecting channel (K...) temporarily blocks the change in the respective priority sequence (PRF) until a number (Z), corresponding to the number (Z-K...) of the transmitting units (D), which can possibly be connected to this connecting channel (K...), at other connecting nodes (VK...), of associated backward signals (ACKj(v)) have arrived.

14. Communication system according to one of Claims 6 to 13 in conjunction with Claim 5, characterized in that in addition to the selection devices (CHSEL-ST(v)) each incoming physical transmission channel (CHi...) is provided with a separate monitoring device (ÜST) which, in a fashion analogous to the selection devices, determines the respectively associated outgoing physical transmission channel (CH(j)) in the case of each item of control information (FLIT...) arriving and supplies a corresponding control signal (REQORi(j)) which, independently of the respective priority level (v) of an associated message arriving via the incoming physical transmission channel (CHi...), switches through in the priority controller (PRIO-ST) the physical transmission path selected by a prioritized virtual path signal (for example CHSELij(0)) of a preceding message and extending via the same outgoing physical transmission channel (CHj), with the result that despite an existing seizure of the virtual transmission channels (CHi(0)) of a physical transmission path (CHi/CHj) messages can be relayed via virtual transmission channels (CHi(2)) of another priority level along the same physical transmission path at a connecting node (VK...).

## Revendications

1. Système de communication constitué d'un réseau de plusieurs noeuds (VK...) de liaison reliés entre eux par l'intermédiaire de canaux (K...) de liaison sous forme de canaux (CH...) de transmission bidirectionnelle, pour la transmission d'informations entre deux unités (par exemple M1 et CPU2) qui sont connectées aux noeuds (VK...) de liaison par l'intermédiaire de canaux (CH...) de transmission bidirectionnelle,
- l'information à transmettre étant subdivisée en parties dans leur longueur constante, une information de commande de la longueur d'une partie d'information étant mise devant chaque information et la dernière partie d'une information étant caractérisée en tant que telle (par exemple par EOT),
- l'information de commande et les parties associées d'informations (DAT0 à DAT8) étant émise successivement sans interruption par l'unité émettrice (par exemple M1) et étant retransmise dans chaque noeud (VK...) de liaison atteint après détermination du canal de transmission de départ sur la base de l'information de commande directement en direction de l'unité de destination (par exemple CPU2),
- l'arrivée d'une information à une unité de destination (par exemple CPU2) étant signalée par celle-ci par un signal (ACK) de retour en arrière par la voie de transmission établie à l'unité (M1) émettrice et
- en cas d'absence du signal (ACK) de retour en arrière jusqu'à ce qu'un temps prescrit soit écoulé après l'émission d'une information, l'émission de l'ensemble de l'information est répétée automatiquement jusqu'à ce que le signal (ACK) de retour en arrière arrive correctement,
caractérisé en ce que
l'ordre (PRF) des priorités pertinent pour la transmission d'un canal de transmission d'arrivée (par exemple CHi) à un canal de transmission de départ (par exemple CHj), des canaux (CH(i)) de transmission arrivant à un noeud (VK...) de liaison en référence à chaque canal (CH(j)) de transmission de départ est modifié cycliquement par chaque signal (ACKj) de retour en arrière arrivant par ce canal, de sorte que chaque canal de transmission d'arrivée soit prioritaire successivement par rapport à tous les autres en référence à chaque canal de transmission d'arrivée, des mémoires tampons (EREG1 respectivement SREG3) pour diverses informations partielles étant utilisées dans chaque noeud (VK...) de liaison pour chaque canal de transmission (par exemple CH1 et CH3) d'arrivée et de départ pour sauter l'opération de retransmission due à l'établissement de la liaison vers un canal de transmission de départ libre.

2. Système de communication suivant la revendication 1,
caractérisé en ce que dans le cas où un canal (VK...) de liaison est prioritaire en tant que canal (CHi) de transmission de départ, l'ordre de priorité existant n'est modifié qu'après l'arrivée d'un nombre (Z) de signaux (ACKj) de retour en arrière qui correspond au nombre (par exemple 7) des unités (D) émettrices pouvant être reliées dans la mesure du possible à ce canal (VK...) de liaison dans d'autres noeuds (VK...) de liaison.

3. Système de communication suivant la revendication 1 ou 2,
caractérisé en ce que en cas de fonctionnement des canaux (CH(i)) physiques de transmission en tant que canaux (CH(i) (v)) de transmission virtuels dans chaque noeud (VK...) de liaison en référence à chaque canal (CHj(v)) de transmission virtuel de départ, l'ordre de priorité des différents canaux de transmission virtuels est superposé à l'ordre (PRF) des priorités valables des canaux (CH(i)) de transmission physiques de telle manière qu'à l'intérieur du groupe des canaux (CH(i)v) de transmission virtuels de même rang (par exemple v = 1) le canal (par exemple (CHA(1)) de transmission physique d'arrivée prioritaire est déterminé et parmi ceux-ci celui (par exemple CHA(1)) à l'intérieur du groupe prioritaire des canaux virtuels de transmission (par exemple CH(i)1) est sélectionné et l'ordre des priorités du groupe d'arrivée de canaux de transmission virtuels est modifié de manière cyclique par chaque signal (ACK(v)) de retour en arrière arrivant par le canal (CHj) de transmission de départ préparé.

4. Système de communication suivant la revendication 3,
caractérisé en ce que en cas d'utilisation de rangs (v) de priorité virtuels différents pour les divers groupes de canaux (CHj)(v)) de transmission virtuels de même rang dans des systèmes pouvant avoir des empêchements de réception dans l'unité de destination pour les informations concernant des canaux (CH(i)(v)) de transmission virtuels d'un rang de priorité plus bas (par exemple v = 2), l'ordre des rangs (v) de priorité virtuels est modifié par un signal (par exemple le signal de fin EOT) obtenu à partir de l'information retransmise par le canal (CHj) de transmission de départ préparé.

5. Système de communication suivant la revendication 4,
pour des systèmes multiprocesseurs comportant une mémoire (MM) commune subdivisée en plusieurs unités (M...) de mémoire, dont les unités (M...) de mémoire sont connectées à des noeuds (VK...) de liaison différents, auxquels sont adressés des travaux d'écriture ou de lecture en tant que travaux primaires par les unités opératrices (par exemple CPU..., IOP...) connectées également aux divers noeuds (VK...) de liaison, des travaux successifs obtenus à partir des travaux primaires de lecture de données et concernant le transfert direct des données lues se déroulant par l'intermédiaire des canaux (CH(i)(0)) virtuels de transmission ayant le rang de priorité virtuel (v = 0) le plus grand,
caractérisé en ce que l'ordre des rangs (v) de priorité virtuels, lorsque le plus haut rang de priorité (v = 0) est prioritaire à un instant et lorsqu'il existe une demande (CHSEL(i)j(0)) pour un canal virtuel de départ (CHj(0)) de ce rang de priorité, n'est modifiée qu'à l'arrivée du signal (ACKj(0)) de retour en arrière par l'intermédiaire du canal (CHj(0)) de transmission virtuel de départ occupé, et, lors de la transmission d'informations par l'intermédiaire de canaux (CHj(v)) de transmission virtuels de rangs de priorité différents (par exemple v = 0 et v = 2) par l'intermédiaire de la même voie physique de transmission entre un canal de transmission physique de départ et un canal de transmission physique d'arrivée (CHi/CHj), une information arrivant par l'intermédiaire du canal (par exemple CHi2) de transmission virtuel non prioritaire à cet instant est également retransmise par l'intermédiaire de la voie de transmission physique, lorsque le canal (CHj) physique de départ est déjà occupé pour l'information par l'intermédiaire de l'autre canal (par exemple CHjO) de transmission virtuel prioritaire à cet instant.

6. Système de communication suivant l'une des revendications 3 ou 5,
caractérisé en ce que tous les canaux de transmission virtuels (CH...(v)) occupés dans le cadre d'une voie de transmission entre deux unités (par exemple M1 et CPU2) ne restent occupés que jusqu'à ce que le signal (ACK...(v)) de retour en arrière soit arrivé sur la voie vers l'unité émettrice, tandis que les canaux (CH...) de transmission physiques associés ne restent occupés que jusqu'à ce que la caractéristique (EOT) indiquant la fin la formation soit retransmise par l'intermédiaire du canal de transmission de départ occupé.

7. Système de communication suivant l'une des revendications 3 à 6,
caractérisé en ce qu'une caractéristique (v), qui indique le rang (v) de priorité du canal (CHi(v) ou CHj(v)) de transmission virtuel utilisé et qui garantit l'association des informations de commande et des informations transmises sur les canaux de transmission physiques (CH...) aux divers canaux (CH...(v)) virtuels, est associé à l'information de commande (FLIT...(v)) d'une information et à chaque signal (ACK...) de retour en arrière.

8. Système de communication suivant la revendication 7,
caractérisé en ce que
la caractéristique (REQ...(v)) fixant le rang de priorité d'une information est transmise sur des lignes de transmission de signaux particulières en parallèle avec l'information de commande (FLIT...(v)) d'une information et déclenche, en tant que signal de demande, la sélection d'une voie dans le noeud (VK...) de liaison atteint.

9. Système de communication suivant la revendication 7 ou 8,
caractérisé en ce que
- il est prévu pour chaque canal (CH...) de transmission physique arrivant dans un noeud (VK...) de liaison un nombre (3) de dispositifs (CHSEL-ST(v)) de sélection qui correspond au nombre (par exemple 3) des canaux virtuels associés (CH...(v)) avec (v = 2, 1 ou 0), le dispositif de sélection pertinent étant sélectionné sur la base de la caractéristique (REQ...(v)) fixant le rang (v) de priorité,
- le dispositif (par exemple CHSEL-ST(v0)) de sélection sélectionné produit, sur la base de l'adresse (ZVKAD, UNAD) de destination contenue dans l'information de commande un signal virtuel de voie (CHSELij(v)), qui caractérise le canal d'arrivée (CHi(v)) et le canal de transmission (CHj(v)) de départ à relier avec celui-ci,
- tous les signaux virtuels de voie produits de cette manière (CHSEL(i)(j)(v)) sont amenés à une commande (PRIO-ST) de priorité commune, qui détermine pour chaque canal (CHj(v)) de transmission de départ libre le canal (CHi(v)) d'arrivée raccordé à celui-ci et ayant la priorité la plus grande et la voie de transmission physique associée est libérée sur la base du résultat (REQij) mémorisée pour la transmission, avec blocage simultané, de tous les signaux (CHSEL(i)j(v)) de voie concernant le même canal (CAJ(v)) de transmission virtuel de départ.

10. Système de communication suivant la revendication 9,
caractérisé en ce qu'il est prévu, dans la commande (PRIO-ST) de priorité de chaque noeud (VK) de liaison pour chaque canal (par exemple CHj) physique de départ, un nombre de circuits de détermination de préséance destiné à déterminer le canal (CHi) de transmission d'arrivée ayant la priorité physique instantanée la plus grande dans le rang (v) de priorité virtuel, ce nombre correspondant au nombre (par exemple 3) des rangs de priorité (v) virtuels et un circuit de détermination de préséance destiné à déterminer le rang de priorité (par exemple (v = 1) virtuel instantané le plus grand sur la base des signaux (CHSEL(i)j(v)) de voie virtuels obtenus à partir des demandes de tous les canaux d'arrivée et un signal (ENj(1)) caractérisant le rang de priorité (par exemple (v = 1) virtuel prioritaire déterminé libère le canal (par exemple Aj(1)) de transmission d'arrivée déterminé par le circuit de détermination de préséance pour la priorité physique du même rang de priorité virtuel, pour la transmission sur le canal de départ (CHj).

11. Système de communication suivant la revendication 10,
caractérisé en ce que les circuits de détermination de préséance sont constitués d'un circuit de commande (PPSTj(v)) ou (VPSTj) destinés à modifier l'ordre des canaux physiques d'arrivée (CHi) ou des rangs (v) de priorité virtuels et d'un circuit logique combinatoire branché en aval (LVj(v) ou LVj-VP) destiné à l'exploitation des signaux virtuels de voie (CHSEL(i)j(v)) en fonction de l'ordre prescrit des priorités, les circuits de commande (PPSTj(v)) destinés à modifier la priorité physique modifiant leur état de commutation à chaque arrivée d'un signal (ACKj(v)) de retour en arrière associé, tandis que le circuit de commande (VPSTj) destiné à modifier l'ordre des rangs de priorité virtuels (v) modifie, lorsque le rang (ENj(0)) de priorité le plus grand est prioritaire et lorsqu'une demande d'un canal de transmission virtuel de ce rang de priorité est présente à l'arrivée du signal (ACKj(0)) de retour en arrière associé et lorsque les autres rangs de priorité (ENj(1), ENj(2)) sont prioritaires, par le signal (par exemple de signal de fin EOTj) obtenu par l'information retransmise par l'intermédiaire du canal de départ (CHj(v)), son état de commutation.

12. Système de communication suivant la revendication 11,
caractérisé en ce que les circuits de commande (PPSTj ou VPSTj) destinés à modifier l'ordre des canaux (CHi) physiques d'arrivée ou des rangs (v) de priorité virtuels sont constitués des dispositifs de commutation fonctionnant cycliquement et ayant un nombre d'états de commutation qui correspond au nombre de tous les canaux physiques d'arrivée ou de tous les rangs de priorité virtuels, chacun de ces états de commutations correspondant à l'un des ordres (par exemple PRF) différents qui sont obtenus lorsque chaque canal de transmission ou chaque rang de priorité prend une fois le plus haut rang dans l'ordre.

13. Système de communication suivant l'une des revendications 10 à 12,
caractérisé en ce que chaque circuit de détermination de préséance (PPSTj(v)) destiné à déterminer le canal (CHi) physique de transmission d'arrivée prioritaire est couplé à un circuit (KONT) de contrôle, qui, lorsqu'un canal de liaison d'arrivée (K...) est prioritaire, empêche temporairement la modification de l'ordre (PRF) de priorité, jusqu'à ce qu'un nombre (Z) de signaux (ACKj(v)) de retour en arrière associé, qui correspond au nombre (Z-K...) des unités (D) émettrices pouvant être reliées dans la mesure du possible à ce canal (K...) de liaison dans d'autres noeuds (VK...) de liaison soit arrivé.

14. Système de communication suivant l'une des revendications 6 à 13 en combinaison avec la revendication 5,
caractérisé en ce que il est prévu pour chaque canal (CHi...) de transmission physique d'arrivée, outre les dispositifs de sélection (CHSEL-ST(v)) un dispositif (ÜST) de contrôle particulier, qui détermine, de manière analogue aux dispositifs de sélection, à chaque arrivée d'information (FLIT...) de commande, le canal (CH(j)) de transmission physique d'arrivée associé il est fourni un signal (REQORi(j)) de commande correspondant, qui connecte, dans la commande (PRIO-ST) de priorité, indépendamment du rang (v) de priorité d'une information associée arrivant par l'intermédiaire du canal (CHi...) de transmission physique d'arrivée, la voie de transmission physique sélectionnée par un signal de voie (par exemple (CHSELij(0)) virtuel prioritaire d'une information précédente et passant par le même canal (CHj) de transmission physique de départ, de sorte que, bien que les canaux (CHi(0)) de transmission virtuels d'une voie (CHi/CHj) de transmission physique restent occupés, des informations puissent être retransmises par l'intermédiaire de canaux (CHi(2)) de transmission virtuels d'un autre rang de priorité le long de la même voie de transmission physique dans un noeud (VK...) de liaison.
